# EUROPÄISCHE PATENTSCHRIFT

(11) **EP 3 621 139 B1**
(45) Veröffentlichungstag und Bekanntmachung des Hinweises auf die Patenterteilung: **21.04.2021**
(21) Anmeldenummer: 19196318.0
(22) Anmeldetag: 10.09.2019
(51) Int. Cl.: H01M 8/2485, H01M 8/247, H01M 8/248, C25B 9/18, B01D 53/32, H01M 8/2475

(54) **ELEKTROCHEMISCHE ENERGIEUMWANDLUNGSVORRICHTUNG**
ELECTROCHEMICAL ENERGY CONVERSION APPARATUS
DISPOSITIF DE CONVERSION DE L'ÉNERGIE ÉLECTROCHIMIQUE

(30) Priorität: 10.09.2018 DE 102018121984; 17.10.2018 DE 102018125788
(43) Veröffentlichungstag der Anmeldung: 11.03.2020
(73) Patentinhaber: Deutsches Zentrum für Luft- und Raumfahrt e.V., 51147 Köln (DE)
(72) Erfinder: WAIBLINGER, Wendelin, 70193 Stuttgart (DE)
(74) Vertreter: Hoeger, Stellrecht & Partner Patentanwälte mbB

(56) Entgegenhaltungen:
- DE-C1- 4 339 405
- JP-A- H0 456 075
- JP-A- H06 196 186
- JP-A- S58 165 276

## Beschreibung

Die vorliegende Erfindung betrifft eine elektrochemische Energieumwandlungsvorrichtung umfassend mindestens zwei elektrochemische Zellen, welche aufeinander gestapelt sind zur Ausbildung eines eine Längsachse definierenden Zellenstapels, wobei mindestens zwei parallel zur Längsachse verlaufende Fluidkanäle vorgesehen sind zum Zuführen und Abführen von Fluiden zu und von den mindestens zwei elektrochemischen Zellen, wobei der Zellenstapel in einem Gehäuse angeordnet ist, wobei die mindestens zwei Fluidkanäle mindestens abschnittsweise vom Zellenstapel und mindestens abschnittsweise vom Gehäuse begrenzt sind, wobei der Zellenstapel parallel zur Längsachse verlaufende Längskanten aufweist, wobei die Längskanten und das Gehäuse relativ zueinander abgedichtet sind, wobei zum Abdichten des Zellenstapels und des Gehäuses jeder Längskante mindestens ein sich parallel zur Längskante erstreckendes Dichtelement zugeordnet ist.

Elektrochemische Energieumwandlungsvorrichtung der eingangs beschriebenen Art werden beispielsweise eingesetzt, um elektrische Energie aus Wasserstoff zu erzeugen oder, vom umgekehrten Prinzip Gebrauch machend, Wasserstoff aus elektrischer Energie herzustellen. Sie sind umfassend erforscht und kommen zunehmend zum Einsatz, da sie insbesondere als Schlüsseltechnologie zur flächendeckenden Umsetzung der Elektromobilität angesehen werden.

In der jüngeren Vergangenheit haben sich sogenannte Protonen-Austausch-Membran-(PEM)-Brennstoffzellen gegenüber Hochtemperatursystemen, die bei Temperaturen oberhalb von 800 °C betrieben werden, aufgrund der vergleichsweise geringen Investitionen etabliert. Zur Ausbildung elektrochemischer Energieumwandlungsvorrichtungen werden in bekannter Weise elektrochemische Zellen eingesetzt, bei denen elektrochemische Membranen und Bipolarplatten aufeinander geschichtet werden. Die Zufuhr von Fluiden, insbesondere von Gasen, zur Versorgung eines auf diese Weise ausgebildeten Zellenstapels elektrochemischer Zellen erfolgt über Versorgungskanäle bildende Fluidkanäle, die in die Bipolarplatten integriert sind.

Ein Problem bei den bekannten elektrochemischen Energieumwandlungsvorrichtungen ist die Abdichtung der Versorgungskanäle. Es ist insbesondere erforderlich, Dichtungen in jeder elektrochemischen Zelle vorzusehen, um einen Gasübertritt zwischen Anode und Kathode der Zelle auszuschließen.

Aus der JP S58 165276 A ist eine Verteilerkanalstruktur für Brennstoffzellen bekannt. In der DE 43 39 405 C1 sind ein gasdichtes Gehäuse für Brennstoffzellenstapel und die Montage des Brennstoffzellenstapels beschrieben. Eine Stromerzeugungsvorrichtung für Brennstoffzellen mit flachem Festkörperelektrolyt ist in der JP H04 56075 A offenbart. Die JP H06 196186 A betrifft Hochtemperaturbrennstoffzellen.

Es ist daher eine Aufgabe der vorliegenden Erfindung, insbesondere eine Herstellung einer elektrochemischen Energieumwandlungsvorrichtung der eingangs beschriebenen Art zu vereinfachen sowie insbesondere eine Effizienz von deren Betrieb zu steigern.

Diese Aufgabe wird bei einer elektrochemischen Energieumwandlungsvorrichtung der eingangs beschriebenen Art erfindungsgemäß dadurch gelöst, dass , das mindestens eine Dichtelement eine in Richtung auf den Fluidkanal hin weisende konkav gekrümmte Dichtfläche definiert.

Die erfindungsgemäß vorgeschlagene Weiterbildung bekannter elektrochemischer Energieumwandlungsvorrichtungen ermöglicht es insbesondere, die mindestens zwei Fluidkanäle nicht durch den Zellenstapel hindurchzuführen, sondern praktisch neben diesem, also zwischen dem Zellenstapel und dem Gehäuse. Der Zellenstapel ist insbesondere vollständig innerhalb des Gehäuses angeordnet und von diesem umgeben. Das Gehäuse ist vorzugsweise separat vom Zellenstapel ausgebildet, so dass bei der Herstellung der elektrochemischen Energieumwandlungsvorrichtung die elektrochemischen Zellen zunächst gestapelt und anschließend in das Gehäuse eingebracht werden können. Abschnittsweise begrenzt bedeutet im vorliegenden Fall insbesondere, dass der Fluidkanal bezogen auf eine vom jeweiligen Fluidkanal definierte Fluidkanallängsachse teilweise vom Zellenstapel und teilweise vom Gehäuse in Umfangsrichtung umgeben ist. Somit verlaufen die Fluidkanäle nicht durch den Zellenstapel hindurch, sondern neben diesem. Des Weiteren ermöglicht diese Ausgestaltung die Ausbildung hocheffizienter Systeme beispielsweise zur Herstellung von Wasserstoff. Durch die Anordnung der mindestens zwei Fluidkanäle, die insbesondere Versorgungskanäle zur Gaszufuhr und Abfuhr von Brennstoffzellen oder Elektrolysezellen bilden, ist eine Integration von Versorgungskanälen in den gestapelten elektrochemischen Zellen nicht mehr erforderlich. Auf diese Weise lässt sich der Einsatz von Dichtungen im Zellenstapel selbst reduzieren. Dadurch kann insbesondere auch ein Kompressionsdruck auf den Zellenstapel auf einen für die Membran-Elektroden-Einheit der jeweiligen elektrochemischen Zellen optimalen Wert eingestellt werden. Als Fluide können insbesondere Gase oder Flüssigkeiten durch die Fluidkanäle geleitet werden, die zum Betrieb einer Brennstoffzelle oder zum Durchführen einer Elektrolyse erforderlich sind. Die Zahl der elektrochemischen Zellen des Zellenstapels ist grundsätzlich beliebig wählbar. Eine Begrenzung der Anzahl ergibt sich allenfalls aufgrund der Handhabbarkeit der elektrochemischen Energieumwandlungsvorrichtung insgesamt. Grundsätzlich ist es denkbar, bis zu 100 sogar noch mehr elektrochemische Zellen in dem Gehäuse als Zellenstapel anzuordnen. Vorteilhaft ist es, dass der Zellenstapel parallel zur Längsachse verlaufende Längskanten aufweist und wenn die Längskanten und das Gehäuse relativ zueinander abgedichtet sind. Auf diese Weise lassen sich abgedichtete Fluidkanäle ausbilden, und zwar zwischen dem Zellenstapel und dem Gehäuse. Günstig ist es, dass zum Abdichten des Zellenstapels und des Gehäuses jeder Längskante mindestens ein sich parallel zur Längskante erstreckendes Dichtelement zugeordnet ist. Auf diese Weise lässt sich die Zahl der Dichtungen zur Ausbildung der elektrochemischen Energieumwandlungsvorrichtung minimieren. Beispielsweise können jeder Längskante auch zwei Dichtelemente zugeordnet sein, die insbesondere derart angeordnet werden können, dass die Längskante zwischen zwei sich parallel zu dieser erstreckenden Dichtelementen angeordnet ist. Um insbesondere eine gute Abdichtung erreichen zu können, ist es vorteilhaft, dass das mindestens eine Dichtelement eine in Richtung auf den Fluidkanal hin weisende konkav gekrümmte Dichtfläche definiert. So können insbesondere auf einfache Weise selbstverstärkende Dichtungen ausgebildet werden, deren Wirkung sich mit zunehmendem Druck in dem durch den Fluidkanal strömenden Fluid verstärkt.

Gemäß einer weiteren bevorzugten Ausführungsform der Erfindung kann vorgesehen sein, dass der Zellenstapel mehrere sich parallel zur Längsachse erstreckende Längsseitenflächen definiert, dass jede Längsseitenfläche von zwei Längskanten begrenzt ist und dass jeder der mindestens zwei Fluidkanäle von einer Längsseitenfläche und einem Wandabschnitt des Gehäuses begrenzt ist, welcher Wandabschnitt sich zwischen den zwei Längskanten der zugeordneten Längsseitenfläche erstreckt. Diese Ausgestaltung hat insbesondere den Vorteil, dass jede elektrochemische Zelle des Zellenstapels von außen mit Fluiden versorgt werden kann. Mit anderen Worten ist eine Medienzufuhr zur jeweiligen elektrochemischen Zelle über Seitenflächen derselben möglich, die einen Teil der Längsseitenfläche des Zellenstapels bilden.

Auf einfache Weise lässt sich die elektrochemische Energieumwandlungsvorrichtung ausbilden, wenn mindestens eine der mehreren Längsseitenflächen eben oder im Wesentlichen eben ausgebildet sind. Vorzugsweise sind alle Längsseitenflächen eben oder im Wesentlichen eben ausgebildet.

Günstigerweise definiert das Gehäuse einen kreisförmigen oder im Wesentlichen kreisförmigen oder ovalen oder im Wesentlichen ovalen Querschnitt. Ein derartiges Gehäuse ist zum einen einfach herzustellen. Zum anderen kann so das Gehäuse mit minimalem Materialaufwand und zudem insbesondere auch mit hoher Druckstabilität ausgebildet werden.

Einfach und kostengünstig lässt sich die elektrochemische Energieumwandlungsvorrichtung ausbilden, wenn das Gehäuse einen den Zellenstapel bezogen auf die Längsachse umgebenden rohrförmigen Hülsenabschnitt umfasst. Mit anderen Worten kann das Gehäuse einen Rohrabschnitt umfassen.

Günstig ist, wenn der Hülsenabschnitt ein erstes Ende und ein in entgegengesetzter Richtung weisendes zweites Ende aufweist und wenn das erste und das zweite Ende verschlossen sind. Auf diese Weise lässt sich ein geschlossenes Gehäuse ausbilden. Insbesondere können das erste und das zweite Ende dauerhaft verschlossen ausgebildet sein.

Günstigerweise sind das erste Ende und/oder das zweite Ende mit einem Gehäusedeckel verschlossen. Beispielsweise kann eines der beiden Enden dauerhaft verschlossen sein, beispielsweise verklebt oder verschweißt. Das andere Ende kann mit einem abnehmbaren Gehäusedeckel verschlossen sein, um gegebenenfalls den Zellenstapel aus dem Gehäuse entnehmen zu können.

Eine hohe Druckstabilität des Gehäuses kann insbesondere dadurch erreicht werden, dass der Gehäusedeckel in Form einer halben Hohlkugel oder im Wesentlichen in Form einer halben Hohlkugel ausgebildet ist. Zum Verbinden des Gehäusedeckels mit dem Hülsenabschnitt können sowohl am Gehäusedeckel als auch am Hülsenabschnitt zueinander korrespondierende, in radialer Richtung von der Längsachse weg abstehende Ringflansche vorgesehen sein. Beispielsweise können die Ringflansche zum Verbinden des Gehäusedeckels und des Hülsenabschnitts mit Schrauben oder Klammern miteinander verbunden werden.

Günstig ist es, wenn der Gehäusedeckel mit dem Hülsenabschnitt lösbar verbunden ist. Insbesondere können der Gehäusedeckel und der Hülsenabschnitt durch Verschrauben oder Verklemmen lösbar miteinander verbunden sein. So lässt sich das Gehäuse durch Entfernen des Gehäusedeckels vom Hülsenabschnitt bei Bedarf öffnen, um den Zellenstapel aus dem Gehäuse zu entnehmen, beispielsweise um defekte elektrochemische Zellen des Zellenstapels auszutauschen.

Günstig ist es ferner, wenn die elektrochemische Energieumwandlungsvorrichtung eine Spanneinrichtung zum Verspannen des Zellenstapels in einer Spannrichtung parallel zur Längsachse umfasst. Mit der Spanneinrichtung können insbesondere die aufeinander gestapelten elektrochemischen Zellen gegeneinander gedrückt werden, um so eine für einen Betrieb derselben erforderlichen Dichtheit der einzelnen elektrochemischen Zellen gewährleisten zu können.

Auf einfache Weise lässt sich die elektrochemische Energieumwandlungsvorrichtung ausbilden, wenn die Spanneinrichtung mindestens zwei zusammenwirkende Spannelemente umfasst und wenn der Zellenstapel zwischen den mindestens zwei Spannelementen angeordnet ist. Der Zellenstapel kann so durch die zwei Spannelemente in gewünschter Weise zusammengedrückt und dadurch zusammengehalten werden. Beispielsweise kann eines der mindestens zwei Spannelemente in Form eines formstabilen Widerlagers an einem Ende des Zellenstapels der Energieumwandlungsvorrichtung ausgebildet sein.

Auf einfache Weise lässt sich die Spanneinrichtung ausbilden, wenn die mindestens zwei Spannelemente jeweils eine Spannfläche aufweisen und wenn die Spannflächen der mindestens zwei Spannelemente aufeinander zu weisen und direkt oder indirekt am Zellenstapel anliegen. Diese Ausgestaltung ermöglicht insbesondere ein flächiges Andrücken der Spannelemente gegen Endflächen des Zellenstapels. So kann eine Spannkraft gleichmäßig auf den Zellenstapel ausgeübt werden.

Besonders einfach und kompakt lässt sich die elektrochemische Energieumwandlungsvorrichtung ausbilden, wenn sich jedes Spannelement an einem Gehäusedeckel abstützt. Beispielsweise kann jedes Spannelement relativ zu einem Gehäusedeckel mit einer Schraubvorrichtung parallel zur Längsachse bewegt werden, um den Zellenstapel zwischen den beiden Spannelementen zu verspannen.

Gemäß einer weiteren bevorzugten Ausführungsform der Erfindung kann vorgesehen sein, dass jede der mindestens zwei elektrochemischen Zellen eine zwischen einer ersten elektrisch leitfähigen Bipolarplatte und einer zweiten elektrisch leitfähigen Bipolarplatte angeordnete Membran-Elektroden-Einheit umfasst. So können einfach herzustellende und kompakt ausgebildete elektrochemische Zellen zur Ausbildung des Zellenstapels eingesetzt werden.

Vorteilhaft ist es, wenn die Biopolarplatten fluiddurchlässig und/oder porös ausgebildet sind und/oder ein Flussfeld mit einer Mehrzahl von Strömungskanälen umfassen. Insbesondere fluiddurchlässige oder poröse Bipolarplatten haben den Vorteil, dass die Medienzufuhr durch die gesamte Seitenfläche der Bipolarplatte möglich ist, die einen Teil der Längsseitenfläche des Zellenstapels bildet. Dadurch sind für die Versorgung der jeweiligen elektrochemischen Zelle keine speziellen Flussfeldstrukturen mehr erforderlich, die üblicherweise in die Bipolarplatten integriert sind. Dadurch vereinfacht sich sowohl die Herstellung der Bipolarplatten als auch die Medienversorgung der elektrochemischen Zellen. Eine Medienzufuhr, beispielsweise eine Gaszufuhr und Gasabfuhr, kann dann über die gesamte Seite der Bipolarplatte erfolgen. So kann insbesondere eine homogene Medienversorgung jeder elektrochemischen Zelle erreicht werden, ohne das sogenannte "tote" Ecken entstehen.

Gemäß einer weiteren bevorzugten Ausführungsform der Erfindung kann vorgesehen sein, dass jede erste Bipolarplatte eine erste Längsseitenfläche und eine zweite Längsseitenfläche definiert, dass die erste Längsseitenfläche an einen ersten Fluidkanal angrenzt und mit diesem fluidwirksam in Verbindung steht, dass die zweite Längsseitenfläche an einen zweiten Fluidkanal angrenzt und mit diesem fluidwirksam in Verbindung steht und dass der erste Fluidkanal und der zweite Fluidkanal relativ zueinander abgedichtet sind. Eine solche Ausgestaltung ermöglicht es insbesondere, durch den ersten Fluidkanal ein Versorgungsmedium zuzuführen und durch den zweiten Fluidkanal ein Versorgungsmedium abzuführen.

Ferner ist es vorteilhaft, wenn jede erste Bipolarplatte eine dritte Längsseitenfläche und eine vierte Längsseitenfläche definiert, wenn die dritte Längsseitenfläche an einen dritten Fluidkanal angrenzt und gegenüber diesem abgedichtet ist und wenn die vierte Längsseitenfläche an einen vierten Fluidkanal angrenzt und gegenüber diesem abgedichtet ist. Durch den dritten und vierten Fluidkanal können weitere Medien strömen, beispielsweise Reaktionsprodukte der elektrochemischen Zellen, die jedoch nicht in die erste Bipolarplatte hinein strömen können, da diese gegenüber dem dritten und vierten Fluidkanal abgedichtet ist.

Ferner ist es günstig, wenn jede zweite Bipolarplatte eine erste Längsseitenfläche und eine zweite Längsseitenfläche definiert, wenn die erste Längsseitenfläche an den ersten Fluidkanal angrenzt und gegenüber diesem abgedichtet ist und wenn die zweite Längsseitenfläche an den zweiten Fluidkanal angrenzt und gegenüber diesem abgedichtet ist. Durch diese Ausgestaltung wird verhindert, dass die durch die ersten und zweiten Fluidkanäle strömenden Medien in die zweiten Bipolarplatten der elektrochemischen Zellen strömen können.

Ferner ist es günstig, wenn jede zweite Bipolarplatte eine dritte Längsseitenfläche und eine vierte Längsseitenfläche definiert, wenn die dritte Längsseitenfläche an den dritten Fluidkanal angrenzt und mit diesem fluidwirksam in Verbindung steht, wenn die vierte Längsseitenfläche an den vierten Fluidkanal angrenzt und mit diesem fluidwirksam in Verbindung steht und wenn der dritte Fluidkanal und der vierte Fluidkanal relativ zueinander abgedichtet sind. Die vorgeschlagene Weiterbildung ermöglicht es insbesondere, den dritten und vierten Fluidkanal zur Medienzufuhr und Medienabfuhr von gasförmigen oder flüssigen Medien oder Gemischen von gasförmigen und flüssigen Medien zu und von den zweiten Bipolarplatten der elektrochemischen Zellen des Zellenstapels zu nutzen.

Um einen sicheren Betrieb der elektrochemischen Energieumwandlungsvorrichtung gewährleisten zu können, ist es günstig, wenn der erste Fluidkanal und der zweite Fluidkanal und der dritte Fluidkanal und der vierte Fluidkanal relativ zueinander abgedichtet sind. Auf diese Weise kann eine Vermischung von durch die Fluidkanäle strömenden Medien verhindert werden.

Gemäß einer weiteren bevorzugten Ausführungsform der Erfindung kann vorgesehen sein, dass die elektrochemische Energieumwandlungsvorrichtung mindestens einen Kühlkanal zum Durchströmen mit einem Kühlfluid umfasst, welcher Kühlkanal mindestens abschnittsweise vom Zellenstapel und mindestens abschnittsweise vom Gehäuse begrenzt ist. Ein solcher Kühlkanal ermöglicht insbesondere eine Kühlung der elektrochemischen Zellen, um deren Überhitzung zu vermeiden. Die besondere Ausgestaltung und Anordnung des mindestens einen Kühlkanals ermöglicht einen einfachen und kompakten Aufbau der elektrochemischen Energieumwandlungsvorrichtung. Der mindestens eine Kühlkanal kann, ebenso wie die mindestens zwei Fluidkanäle, ohne besondere Vorkehrungen im Bereich des Zellenstapels neben diesem verlaufen. Ein Kühlmedium kann somit beispielsweise eine Längsseitenfläche des Zellenstapels entlang einer Längserstreckung desselben kühlen. Insbesondere können auch zwei, drei, vier oder mehr derartige Kühlkanale vorgesehen werden. Zur Kühlung kann optional eine zusätzliche Durchströmung durch eine weitere, beispielsweise poröse Kühlplatte zwischen den Bipolarplatten oder ein mit einem Flussfeld versehenes Bipolarplattenpaar vorgesehen werden. Zur Abdichtung sind dann vorzugsweise Dichtungen vorgesehen.

Vorteilhaft ist es, wenn der mindestens eine Kühlkanal von einer Längsseitenfläche und einem Wandabschnitt des Gehäuses begrenzt ist, welcher Wandabschnitt sich zwischen den zwei Längskanten der zugeordneten Längsseitenfläche erstreckt. Auf diese Weise lässt sich ein Hohlraum, der zwischen dem Zellenstapel und dem Gehäuse ausgebildet wird, insbesondere als Kühlkanal nutzen.

Vorzugsweise ist die den mindestens einen Kühlkanal begrenzende Längsseitenfläche des Zellenstapels fluiddicht verschlossen. Auf diese Weise kann verhindert werden, dass ein Kühlmedium in den Zellenstapel eindringen kann. Ferner wird umgekehrt auch verhindert, dass Versorgungsmedien oder in den elektrochemischen Zellen erzeugte Fluide in den Kühlkanal gelangen können.

Günstig ist es zudem, wenn die Fluidkanäle längs ihrer Erstreckung parallel zur Längsachse ohne umlaufende Dichtelemente ausgebildet sind. Dies bedeutet insbesondere, dass keine bezogen auf eine Fluidkanallängsachse umlaufenden Dichtelemente erforderlich sind, um die elektrochemische Energieumwandlungsvorrichtung auszubilden. Genau solche Dichtelemente sind jedoch erforderlich, um bei bekannten elektrochemischen Energieumwandlungsvorrichtungen elektrochemische Zellen oder Teile derselben relativ zueinander abzudichten, da bei den bekannten System die Fluidkanäle durch die Bipolarplatten der elektrochemischen Zellen hindurch verlaufen.

Gemäß einer weiteren bevorzugten Ausführungsform der Erfindung kann vorgesehen sein, dass zwischen zwei elektrochemischen Zellen des Zellenstapels ein Trennelement angeordnet ist, welches einerseits an einer Bipolarplatte der einen elektrochemischen Zelle angrenzt und welches andererseits an einer Bipolarplatte der anderen elektrochemischen Zelle angrenzt. Ein solches Trennelement ermöglicht insbesondere eine räumliche Trennung und gegebenenfalls auch eine fluidische Abdichtung der aneinander anliegenden Bipolarplatten zweier benachbarter elektrochemischer Zellen.

Günstig ist es, wenn das Trennelement zwei voneinander weg weisende Längsseitenflächen der Bipolarplatte der einen elektrochemischen Zelle und zwei voneinander weg weisende Längsseitenflächen der Bipolarplatte der anderen elektrochemischen Zelle abdichtet. Das Trennelement kann insbesondere einstückig ausgebildet sein, so dass es auf diese Weise von jeder Bipolarplatte der beiden benachbarten elektrochemischen Zellen zwei Längsseitenflächen abdichtet. So kann auf einfache und kompakte Weise eine Trennung benachbarter elektrochemischer Zellen erreicht werden. Durch die Abdichtung der angegebenen Längsseitenflächen der aneinander angrenzenden Bipolarplatten benachbarter elektrochemischer Zellen können Zugänge beziehungsweise Fluidverbindungen zwischen den jeweiligen Bipolarplatten und den Fluidkanälen auf einfache Weise erreicht werden.

Insbesondere ist es vorteilhaft, wenn die Bipolarplatte der einen elektrochemischen Zelle eine erste Bipolarplatte derselben definiert und wenn die Bipolarplatte der anderen elektrochemischen Zelle eine zweite Bipolarplatte definiert. Wie oben beschrieben können so die Bipolarplatte der einen elektrochemischen Zelle und die Bipolarplatte der anderen elektrochemischen Zelle einerseits mit dem ersten und zweiten Fluidkanal und andererseits mit dem dritten und vierten Fluidkanal fluidwirksam verbunden werden, um die erforderlichen Medien in Form von Fluiden zu den jeweiligen Bipolarplatten zuzuführen und abzuführen.

Gemäß einer weiteren bevorzugten Ausführungsform der Erfindung kann vorgesehen sein, dass die Membran-Elektroden-Einheit eine elektrisch isolierende Protonen-Austausch-Membran umfasst und dass die Protonen-Austausch-Membran zwischen zwei Trennelementen angeordnet ist und diese gegeneinander elektrisch isoliert. Zusätzlich zu ihrer eigentlichen Funktion dient die Protonen-Austausch-Membran jeder elektrochemischen Zelle insbesondere gleichzeitig auch als Isolationselement, um zwischen den benachbarten elektrochemischen Zellen angeordnete Trennelemente elektrisch gegeneinander zu isolieren.

Einfach und kompakt lässt sich die elektrochemische Energieumwandlungsvorrichtung ausbilden, wenn das Trennelement fluiddicht und elektrisch leitfähig ausgebildet ist.

Günstig ist es, wenn am Gehäuse mindestens zwei Fluidanschlüsse angeordnet oder ausgebildet sind und wenn jeder der zwei Fluidanschlüsse mit einem der mindestens zwei Fluidkanäle fluidwirksam verbunden ist. So können zentral über die mindestens zwei Fluidanschlüsse Medien zu den elektrochemischen Zellen geleitet oder von den elektrochemischen Zellen abgeführt werden. Vorzugsweise entspricht die Anzahl der Fluidanschlüsse mindestens der Anzahl der Fluidkanäle der elektrochemischen Energieumwandlungsvorrichtung.

Vorteilhafterweise sind jedem Fluidkanal mehrere, insbesondere zwei, drei oder vier, Fluidanschlüsse zugeordnet. Auf diese Weise kann eine Flussrate der durch die elektrochemischen Zellen strömenden Medien erhöht beziehungsweise die strömenden Medien können besser verteilt werden.

Um insbesondere die elektrische Energieumwandlungsvorrichtung unter hohem Druck betreiben zu können, beispielsweise mit Drücken bis zu oder gegebenenfalls auch mehr als 1000 bar, ist das Gehäuse vorzugsweise druckstabil ausgebildet. Dies kann beispielsweise durch eine entsprechende Wandstärke des Gehäuses und/oder durch eine Form desselben erreicht werden. Vorteilhaft ist es, wenn der Zellenstapel bezogen auf die Längsachse eckig ausgebildet ist. Insbesondere kann der Zellenstapel dreieckig, viereckig, fünfeckig, sechseckig oder achteckig ausgebildet sein. Beispielsweise ermöglicht es eine fünfeckige Ausbildung des Zellenstapels, vier Fluidkanäle und einen Kühlkanal vorzusehen. Eine sechseckige Ausbildung ermöglicht insbesondere vier Fluidkanäle und zwei Kühlkanäle vorzusehen. Zwei Kühlkanäle können insbesondere genutzt werden, um ein Kühlmedium oder Kühlfluid zu einer weiteren, beispielsweise porösen Kühlplatte zwischen den Bipolarplatten oder zu einem mit einem Flussfeld versehene Bipolarplattenpaar hinzuleiten und auch wieder abzuleiten.

Vorteilhaft ist es, wenn die mindestens zwei elektrochemischen Zellen in Form von Brennstoffzellen oder in Form von Elektrolysezellen oder in Form von Protonenpumpen ausgebildet sind. Beispielsweise kann mit den Brennstoffzellen Strom erzeugt werden aus Wasserstoff und Sauerstoff und mit den Elektrolysezellen Wasserstoff aus Wasser. Mit einer Protonenpumpe kann beispielsweise Wasserstoff aus einer Gasmischung separiert werden.

Ferner wird vorgeschlagen, eine der oben beschriebenen elektrochemischen Energieumwandlungsvorrichtungen zum Umwandeln chemischer Energie in elektrische Energie oder zum Umwandeln elektrischer Energie in chemische Energie oder als Protonenpumpe zu verwenden.

Die nachfolgende Beschreibung bevorzugter Ausführungsformen der Erfindung dient im Zusammenhang mit den Zeichnungen der näheren Erläuterung. Es zeigen:
- Figur 1:: eine teilweise durchbrochene schematische Gesamtansicht eines Ausführungsbeispiels einer elektrochemischen Energieumwandlungsvorrichtung ;

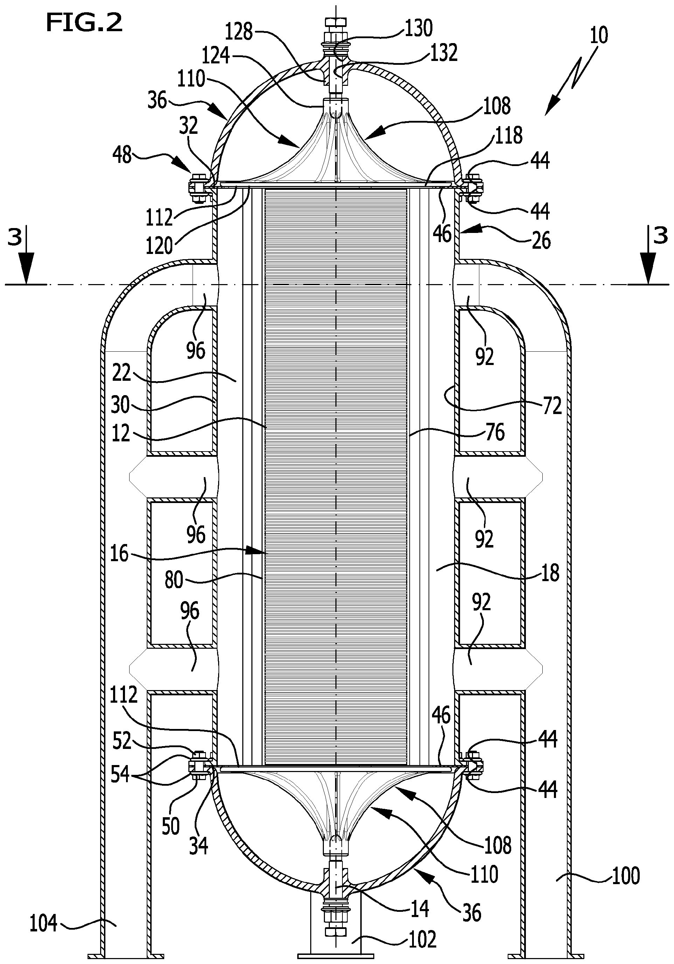

- Figur 2:: eine Schnittansicht längs Linie 2-2 in Figur 1;

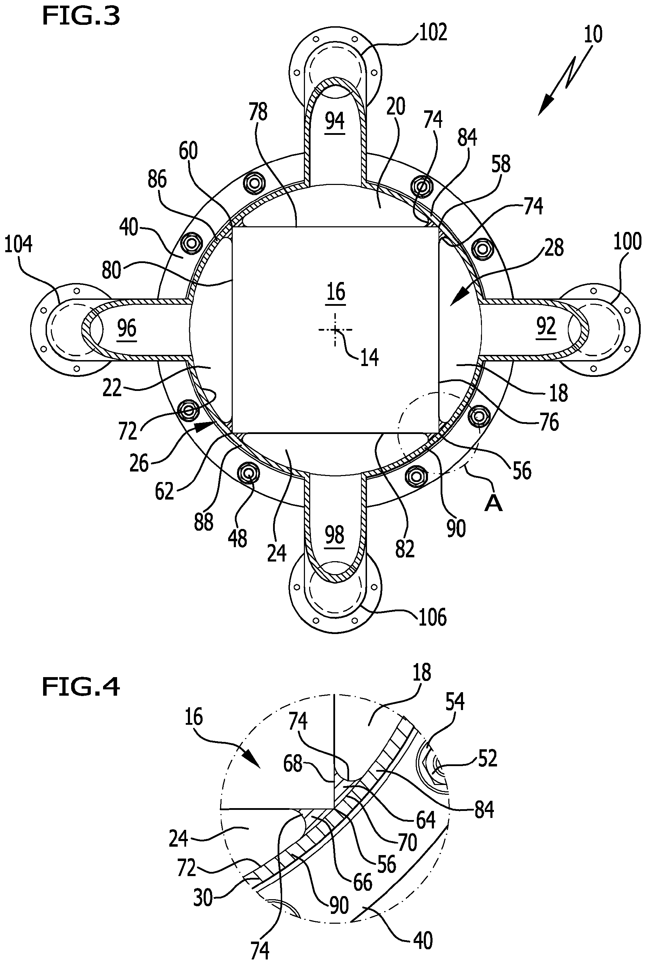

- Figur 3:: eine Schnittansicht längs Linie 3-3 in Figur 2;
- Figur 4:: eine vergrößerte Teilansicht des Bereichs A in Figur 3;

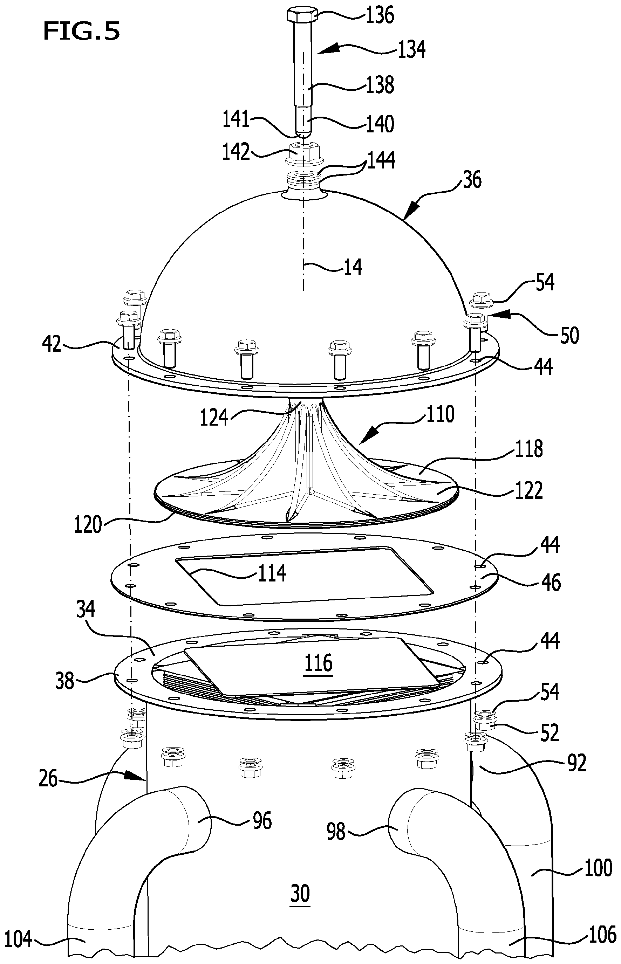

- Figur 5:: eine Explosionsdarstellung eines Teils der elektrochemischen Energieumwandlungsvorrichtung aus Figur 1;

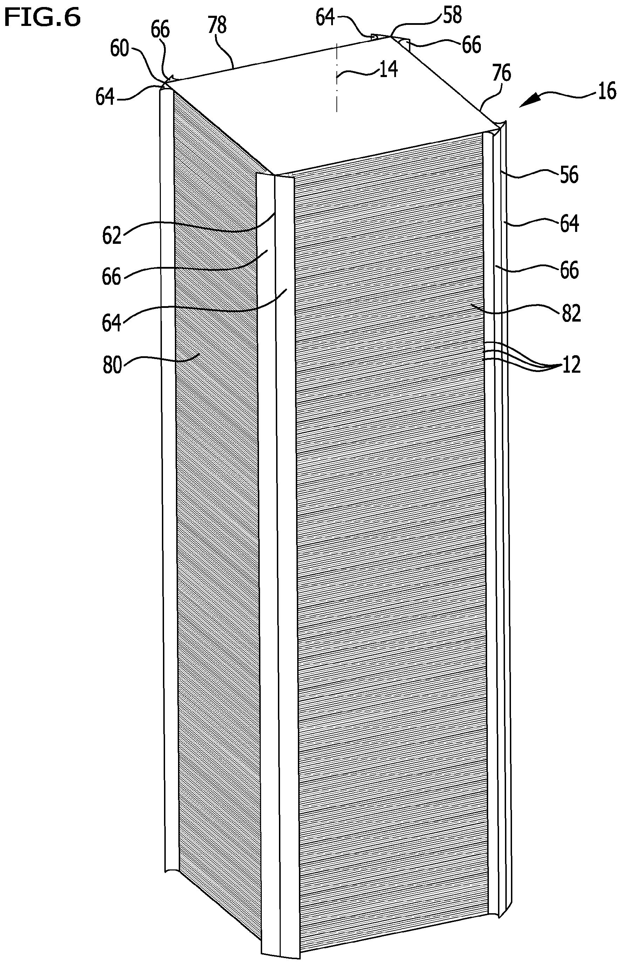

- Figur 6:: eine schematische Gesamtansicht eines Zellenstapels der elektrochemischen Energieumwandlungsvorrichtung aus Figur 1 mit an den Längskanten angeordneten Dichtelementen;

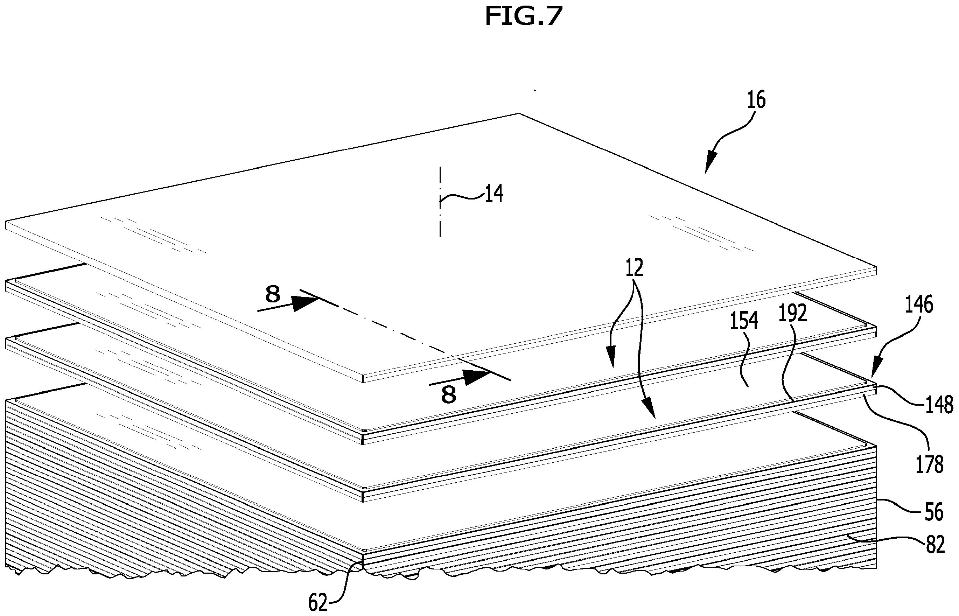

- Figur 7:: eine teilweise Explosionsdarstellung eines Teils des Zellenstapels aus Figur 6;

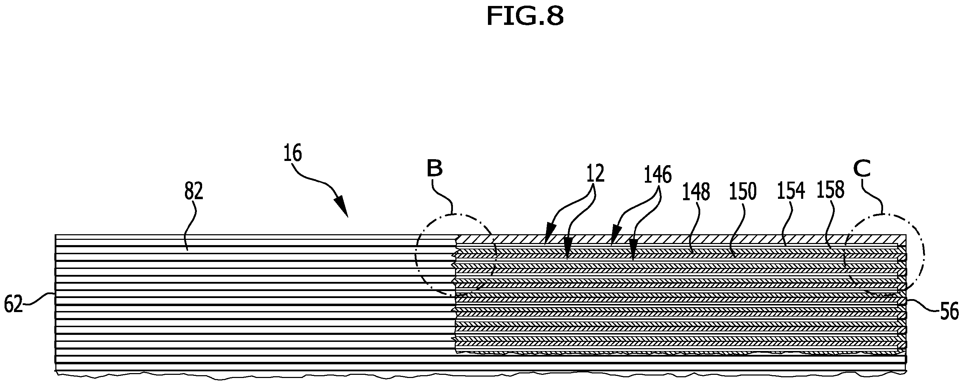

- Figur 8:: eine Schnittansicht längs Linie 8-8 in Figur 7;

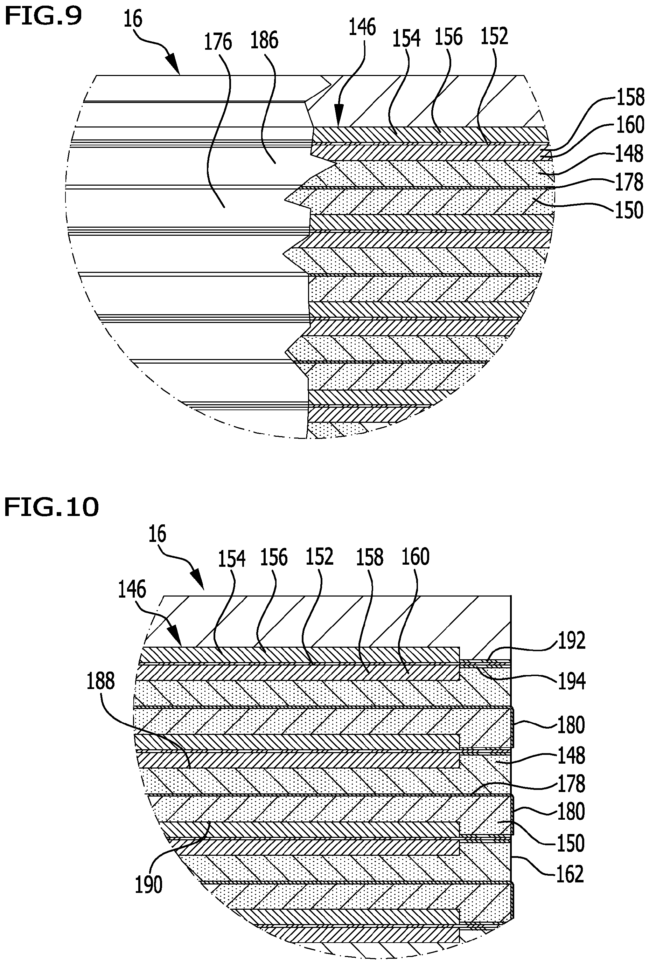

- Figur 9:: eine vergrößerte Teilansicht des Bereichs B in Figur 8;
- Figur 10:: eine vergrößerte Teilansicht des Bereichs C in Figur 8;

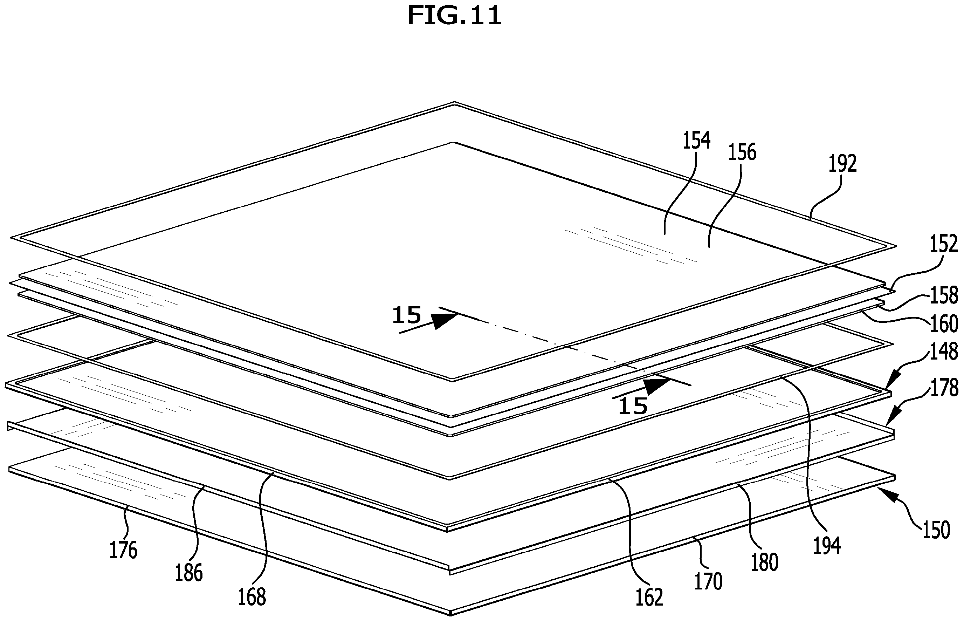

- Figur 11:: eine weitere schematische Explosionsdarstellung eines Zellenstapels;

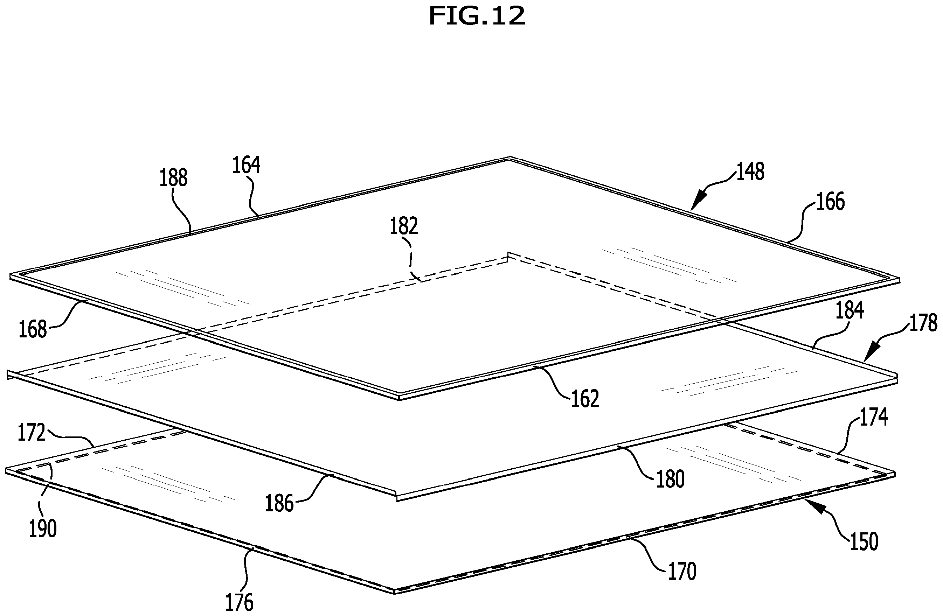

- Figur 12:: eine Explosionsdarstellung eines Teils eines Zellenstapels mit einem Trennelement zwischen zwei Bipolarplatten;

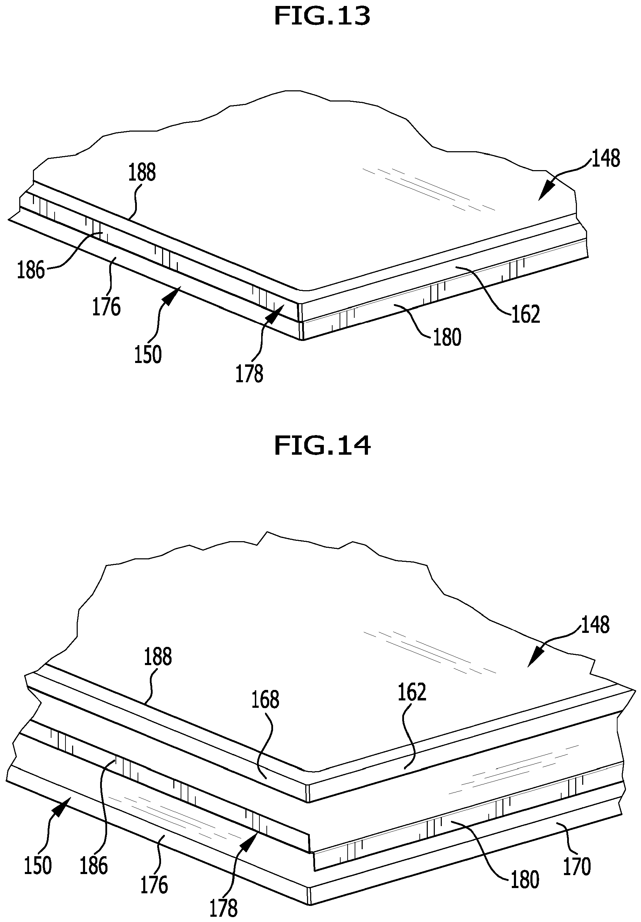

- Figur 13:: eine Teilansicht eines Zellenstapels mit einem zwischen zwei Bipolarplatten eingesetzten Trennelement;
- Figur 14:: eine Explosionsdarstellung der Anordnung aus Figur 13;

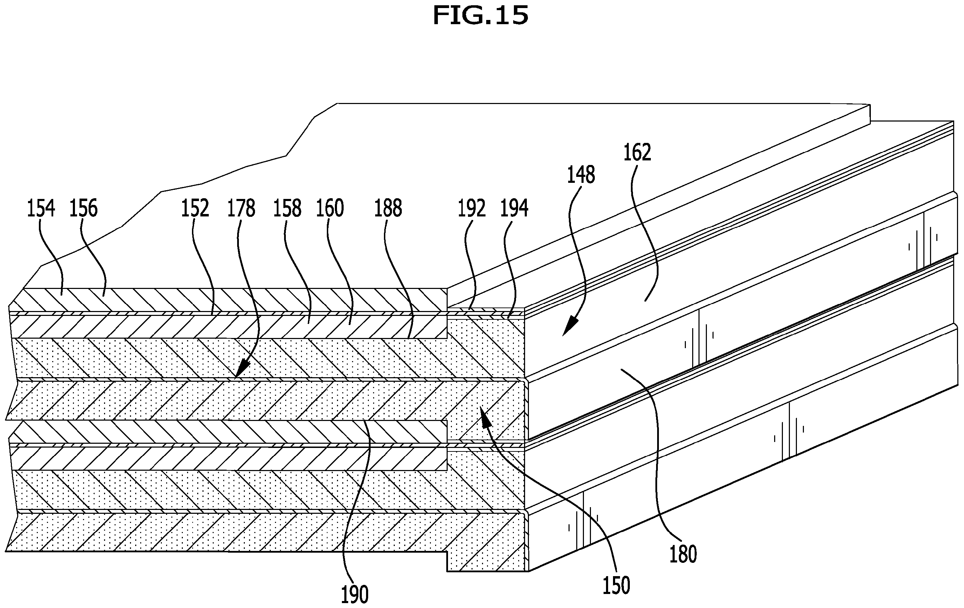

- Figur 15:: eine Schnittansicht längs Linie 15-15 in Figur 11; und
- Figur 16:: eine Schnittansicht ähnlich Figur 3 durch ein weiteres Ausführungsbeispiel einer elektrochemischen Energieumwandlungsvorrichtung mit einem im Querschnitt sechseckigen Zellenstapel.

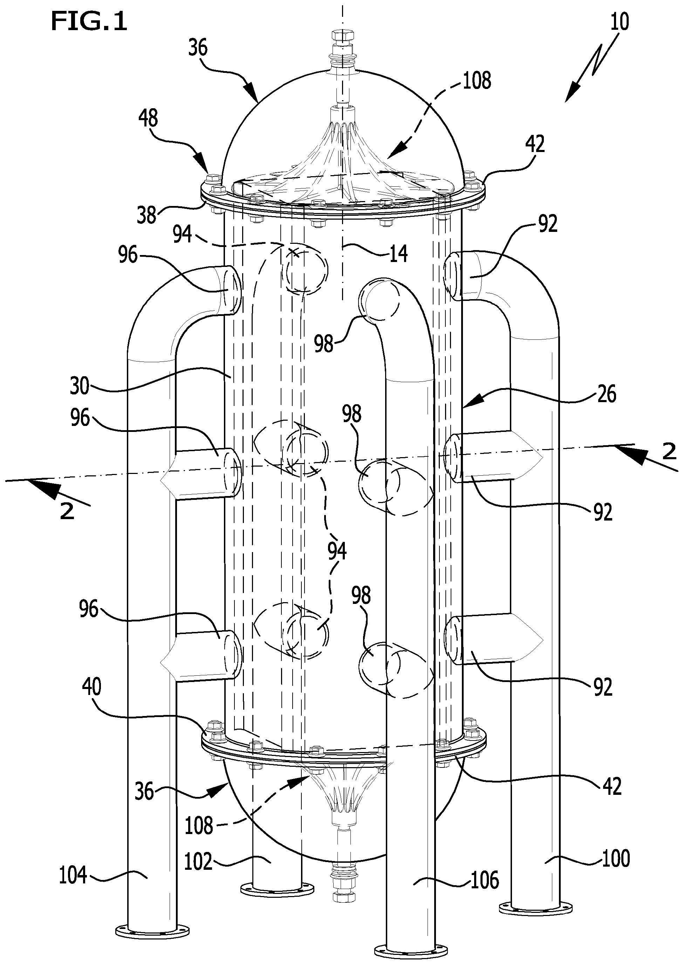

Ein erstes Ausführungsbeispiel einer elektrochemischen Energieumwandlungsvorrichtung 10 ist schematisch in Figur 1 dargestellt. Sie umfasst eine Mehrzahl elektrochemischer Zellen 12, welche aufeinander gestapelt sind zur Ausbildung eines eine Längsachse 14 definierenden Zellenstapels 16.

Die elektrochemische Energieumwandlungsvorrichtung 10 umfasst ferner vier parallel zur Längsachse 14 verlaufende Fluidkanäle 18, 20, 22 und 24, welche ausgebildet sind zum Zuführen und Abführen von Fluiden in Form von Gasen oder Flüssigkeiten zu und von den elektrochemischen Zellen 12.

Bei den Fluidkanälen 18, 20, 22 und 24 handelt es sich um einen ersten Fluidkanal 18, einen zweiten Fluidkanal 20, einen dritten Fluidkanal 22 und einen vierten Fluidkanal 24.

Der Zellenstapel 16 ist in einem Gehäuse 26 angeordnet, so dass die Fluidkanäle 18, 20, 22 und 24 abschnittsweise vom Zellenstapel 16 und abschnittsweise vom Gehäuse 26 begrenzt sind.

Der Zellenstapel 16 ist vollständig vom Gehäuse 26 umgeben und in einem vom Gehäuse 26 definierten Innenraum 28 angeordnet.

Das Gehäuse 26 ist druckstabil ausgebildet.

Das Gehäuse 26 definiert bei dem in Figur 1 dargestellten Ausführungsbeispiel der elektrochemischen Energieumwandlungsvorrichtung 10 einen kreisförmigen oder im Wesentlichen kreisförmigen Querschnitt. Alternativ kann der Querschnitt des Gehäuses 26 auch oval oder im Wesentlichen oval ausgebildet sein.

Das Gehäuse 26 umfasst ferner einen den Zellenstapel 16 bezogen auf die Längsachse 14 umgebenden rohrförmigen Hülsenabschnitt 30. Der Hülsenabschnitt 30 weist ein erstes Ende 32 und ein in entgegengesetzter Richtung weisendes zweites Ende 34 auf. Beide Enden 32 und 34 sind verschlossen.

Zum Verschließen der Enden 32 und 34 des Hülsenabschnitts 30 sind identisch ausgebildete Gehäusedeckel 36 vorgesehen. Diese weisen die Form einer halben Hohlkugel oder im Wesentlichen die Form einer halben Hohlkugel auf.

Am ersten Ende 32 des Hülsenabschnitts 30 ist ein erster in radialer Richtung von der Längsachse 14 weg weisender Ringflansch 38 ausgebildet. In analoger Weise ist ein zweiter Ringflansch 40 am zweiten Ende 34 ausgebildet.

Die Gehäusedeckel 30 umfassen jeweils einen ebenfalls in radialer Richtung von der Längsachse 14 weg weisenden dritten Ringflansch 42.

Der erste Ringflansch 38, der zweite Ringflansch 40 und der dritte Ringflansch 42 sind jeweils mit einer Mehrzahl von parallel zur Längsachse 14 verlaufenden und zueinander ausgerichteten Bohrungen 44 versehen.

Zum Verbinden der Gehäusedeckel 36 mit dem Hülsenabschnitt 30 ist zwischen den ersten Ringflansch 38 und den dritten Ringflansch 42 des einen Gehäusedeckels 36 ein Dichtelement 46 eingelegt. In analoger Weise ist ein identisches Dichtelement 46 zwischen den zweiten Ringflansch 40 und den dritten Ringflansch 42 des anderen Gehäusedeckels 36 eingelegt.

Zum lösbaren Verbinden der Gehäusedeckel 36 mit dem Hülsenabschnitt 30 durch Verschrauben dient eine Mehrzahl von Schraubverbindungen 48 umfassend jeweils einen Gewindebolzen 50 mit Kopf, eine auf einen Gewindeabschnitt des Gewindebolzens 50 aufschraubbare Gewindemutter 52 und zwei Unterlegscheiben 54, die einerseits zwischen dem Kopf des Gewindebolzens 50 und dem dritten Ringflansch 42 und andererseits zwischen dem ersten Ringflansch 38 beziehungsweise dem zweiten Ringflansch 40 und der Gewindemutter 52 angeordnet sind.

Der quaderförmige Zellenstapel 16, der einen quadratischen Querschnitt aufweist, weist insgesamt vier parallel zur Längsachse 14 verlaufende Längskanten 56, 58, 60 und 62 auf, die relativ zum Gehäuse 26 abgedichtet sind. Zum Abdichten des Zellenstapels 16 und des Gehäuses 26 sind jeder Längskante 56, 58, 60 und 62 zwei sich parallel zu dieser sowie zur Längsachse 14 erstreckende Dichtelemente 64 und 66 zugeordnet.

Die profilierten Dichtelemente 64 und 66 sind identisch ausgebildet und weisen im Querschnitt eine im Wesentlichen dreieckige Keilform auf, wobei eine erste Dichtfläche 68 flächig am Zellenstapel 16 und eine zweite Dichtfläche 70 an einer inneren Wandfläche 72 des Hülsenabschnitts 30 anliegt. Eine dritte Dichtfläche 74 ist in Richtung auf den jeweiligen Fluidkanal 18, 20, 22 beziehungsweise 24 konkav gekrümmt, so dass ein den jeweiligen Fluidkanal 18, 20, 22 beziehungsweise 24 durchströmendes Fluid das Dichtelement 64 beziehungsweise 66 zwischen den Zellenstapel 16 und die Wandfläche 72 drückt.

Die Längskanten 56, 58, 60 und 62 reichen idealerweise bis an die innere Wandfläche 72 heran.

Alternativ können die Dichtelemente 64 und 66 über einen schmalen Steg miteinander verbunden sein, das heißt insgesamt einstückig ausgebildet sein. Der schmale Steg ist dann im Bereich der jeweiligen Längskanten 56, 58, 60 beziehungsweise 62 angeordnet. Ein derart ausgebildetes einstückiges Dichtelement vereinfacht die Montage der elektrochemischen Energieumwandlungsvorrichtung 10.

Der Zellenstapel 16 definiert insgesamt vier sich parallel zur Längsachse 14 erstreckende Längsseitenflächen 76, 78, 80 und 82.

Jede Längsseitenfläche 76, 78, 80 und 82 ist von zwei der vier Längskanten 56, 58, 60 und 62 begrenzt. Auf diese Weise ist jeder der vier Fluidkanäle 18, 20, 22 und 24 von einer der vier Längsseitenflächen 76, 78, 80 beziehungsweise 82 und einem Wandabschnitt 84, 86, 88 beziehungsweise 90 begrenzt. Die vier Wandabschnitte 84, 86, 88 und 90 bilden insgesamt den Hülsenabschnitt 30 aus.

Jeder Wandabschnitt 84, 86, 88 und 90 erstreckt sich zwischen zwei der vier Längskanten 56, 58, 60 und 62 der dem jeweiligen Wandabschnitt 84, 86, 88 und 90 zugeordneten Längsseitenfläche 76, 78, 80 beziehungsweise 82.

Bei dem in den Figuren dargestellten Ausführungsbeispiel der elektrochemischen Energieumwandlungsvorrichtung 10 sind die Längsseitenflächen 76, 78, 80 und 82 eben oder im Wesentlichen eben ausgebildet.

Am Hülsenabschnitt 30 sind mehrere Fluidanschlüsse 92, 94, 96 und 98 angeordnet, nämlich drei erste Fluidanschlüsse 92, die mit dem ersten Fluidkanal 18 fluidwirksam verbunden sind, drei zweite Fluidanschlüsse 94, die mit dem zweiten Fluidkanal 20 fluidwirksam verbunden sind, drei dritte Fluidanschlüsse 96, die mit dem dritten Fluidkanal 22 fluidwirksam verbunden sind, und drei vierte Fluidanschlüsse 98, die mit dem vierten Fluidkanal 24 fluidwirksam verbunden sind.

Die ersten Fluidanschlüsse 92 sind fluidwirksam mit einer ersten Anschlussleitung 100 fluidwirksam verbunden, die drei zweiten Fluidanschlüsse 94 sind mit einer zweiten Anschlussleitung 102 fluidwirksam verbunden, die drei dritten Fluidanschlüsse 96 sind mit einer dritten Anschlussleitung 104 fluidwirksam verbunden und die drei vierten Fluidanschlüsse 98 sind mit einer vierten Anschlussleitung 106 fluidwirksam verbunden.

Die elektrochemische Energieumwandlungsvorrichtung 10 umfasst ferner eine Spanneinrichtung 108 zum Verspannen des Zellenstapels 16 in einer Spannrichtung parallel zur Längsachse 14 im Gehäuse 26.

Die Spanneinrichtung 108 umfasst zwei zusammenwirkende, aus einem elektrisch leitfähigen Material ausgebildete Spannelemente 110, die identisch ausgebildet sind und zwischen denen der Zellenstapel 16 angeordnet ist.

Die Spannelemente 110 definieren jeweils eine Spannfläche 112, wobei die Spannflächen 112 der zwei Spannelemente 110 aufeinander zu weisen und indirekt am Zellenstapel 16 anliegen. Zwischen den Spannflächen 112 und dem Zellenstapel 16 ist zum einen das Dichtelement 46 angeordnet, welches eine im Wesentlichen quadratische Durchbrechung 114 aufweist, in die formschlüssig oder durch Vulkanisieren eine elektrisch leitfähige Platte 116 eingesetzt ist, an der jeweils eine der Spannflächen 112 anliegt.

Jedes Spannelement 110 umfasst eine kreisförmige Scheibe 118, deren Unterseite 120 die Spannfläche 112 definiert. Auf einer Oberseite 122 der Scheiben 118 steht senkrecht und somit koaxial zur Längsachse 14 ein hülsenförmiger Stutzen 124 ab, welcher mit einem Innengewinde 126 versehen ist.

Am Gehäusedeckel 36 ist eine mit einem koaxial zur Längsachse 14 verstärkten Stutzen 128 ausgebildete Durchbrechung 130 ausgebildet, die ebenfalls mit einem Innengewinde 132 versehen ist. Ein Innendurchmesser des Innengewindes 126 ist kleiner als ein Durchmesser des Innengewindes 132.

Zum Verspannen des Zellenstapels 16 umfasst die Spanneinrichtung 108 einen Spannbolzen 134 mit einem Kopf 136, an den sich ein erster Außengewindeabschnitt 138 anschließt, welcher korrespondierend zum Innengewinde 132 ausgebildet ist. An den Außengewindeabschnitt 138 schließt sich ein im Durchmesser kleinerer zylindrischer Abschnitt 140 mit kugeligen Lagerkopf 141 an, welcher korrespondierend zum hülsenförmigen Stutzen 124 ausgebildet ist und in diesen eingreift. Der Lagerkopf 141 und ein inneres Ende des Stutzens 124, welches in der Art einer Gelenkpfanne ausgebildet ist, ermöglicht es, dass der Abschnitt 140 und der Stutzen 134 beim Einschrauben des Spannbolzens 134 zum Verspannen des Zellenstapels 16 relativ zueinander verdreht werden können.

Des Weiteren ist eine Kontermutter 142 vorgesehen, deren Innengewinde zum Außengewindeabschnitt 138 korrespondiert. Zwischen der Kontermutter 142 und dem Stutzen 128, der den Gehäusedeckel 36 durchsetzt, sind zwei den Außengewindeabschnitt 138 umgebende Unterlegscheiben 144 angeordnet, die insbesondere zum Aufnehmen elektrischer Kontakte der elektrochemischen Energieumwandlungseinrichtung 10 dienen können.

Durch Einschrauben des Spannbolzens 134 in das Innengewinde 132 des Stutzens 128 kann das Spannelement 110 in Richtung auf den Zellenstapel 16 bewegt. Auf diese Weise kann der Zellenstapel 16 mit der Spanneinrichtung 108 zwischen den Spannflächen 112 der Spannelemente 110 verspannt werden. Ein Verspannen bedeutet hier insbesondere ein Zusammendrücken des Zellenstapels 16 parallel zur Längsachse 14. In der beschriebenen Weise stützen sich die Spannelemente 110 jeweils an einem Gehäusedeckel 36 ab, um die zum Verspannen des Zellenstapels 16 erforderliche Kraft aufzubringen.

Die Spanneinrichtung 108 ist gegenüber dem Gehäuse 26 elektrisch isoliert. So bilden die beiden Spannbolzen insbesondere auch elektrische Anschlusskontakte der elektrochemischen Energieumwandlungsvorrichtung 10, also beispielsweise einen Pluspol und einen Minuspol derselben.

Jede der elektrochemischen Zellen 12 umfasst eine Membran-Elektroden-Einheit 146, die zwischen einer ersten Bipolarplatte 148 und einer zweiten Bipolarplatte 150 angeordnet ist.

Die Membran-Elektroden-Einheit 146 umfasst eine Protonenaustauschmembran 152, die eine erste Elektrode 154 in Form einer Anode 156 und eine zweite Elektrode 158 in Form einer Kathode 160 trägt.

Die Bipolarplatten 148 und 150 sind elektrisch leitfähig ausgebildet.

Ferner sind die Bipolarplatten 148 und 150 fluiddurchlässig und/oder porös ausgebildet. Alternativ können sie auch in herkömmlicher Weise ein sogenanntes Flussfeld mit einer Mehrzahl von Strömungskanälen umfassen, um fluidische Medien zur Protonenaustauschmembran 152 zu leiten oder von dieser abzuleiten.

Ferner definiert jede erste Bipolarplatte 148 eine erste Längsseitenfläche 162 und eine zweite Längsseitenfläche 164. Der Zellenstapel 16 ist derart angeordnet und ausgerichtet, dass die erste Längsseitenfläche 162 an den ersten Fluidkanal 18 angrenzt und mit diesem fluidwirksam in Verbindung steht und dass die zweite Längsseitenfläche 164 an den dritten Fluidkanal 22 angrenzt und mit diesem fluidwirksam in Verbindung steht. Der erste Fluidkanal 18 und der zweite Fluidkanal 22 sind relativ zueinander abgedichtet.

Ferner definiert jede erste Bipolarplatte 148 eine dritte Längsseitenfläche 166 und eine vierte Längsseitenfläche 168. Die dritte Längsseitenfläche 166 grenzt an den zweiten Fluidkanal 20 an und ist gegenüber diesem abgedichtet. Die vierte Längsseitenfläche 168 grenzt an den vierten Fluidkanal 24 an und ist gegenüber diesem abgedichtet.

Des Weiteren definiert jede zweite Bipolarplatte 150 eine erste Längsseitenfläche 170 und eine zweite Längsseitenfläche 172. Die erste Längsseitenfläche 170 ist an den ersten Fluidkanal 18 angrenzend angeordnet und gegenüber diesem abgedichtet. Die zweite Längsseitenfläche 172 grenzt an den dritten Fluidkanal 22 an und ist gegenüber diesem abgedichtet.

Ferner definiert jede zweite Bipolarplatte 150 eine dritte Längsseitenfläche 174 und eine vierte Längsseitenfläche 176. Die dritte Längsseitenfläche 174 grenzt an den zweiten Fluidkanal 20 an und steht mit diesem fluidwirksam in Verbindung. Die vierte Längsseitenfläche 176 grenzt an den vierten Fluidkanal 24 an und steht mit diesem fluidwirksam in Verbindung. Ferner sind der zweite Fluidkanal 20 und der vierte Fluidkanal 24 relativ zueinander abgedichtet.

Durch die Anordnung des Zellenstapels 16 und insbesondere der Dichtelemente 64 und 66 sind der erste Fluidkanal 18 und der zweite Fluidkanal 20 und der dritte Fluidkanal 22 und der vierte Fluidkanal 24 relativ zueinander abgedichtet.

Durch die besondere Ausgestaltung und Anordnung der Fluidkanäle 18, 20, 22 und 24 kann längs ihrer Erstreckung quer zur Längsachse 14 auf jegliche umlaufenden Dichtelemente verzichtet werden. Umlaufend bedeutet hier bezogen auf eine Fluidkanallängsachse des jeweiligen Fluidkanals 18, 20, 22 und 24.

Zwischen zwei direkt aufeinander gestapelten elektrochemische Zellen 12 des Zellenstapels 16 ist ein Trennelement 178 angeordnet. Das Trennelement 178 grenzt einerseits an die zweite Bipolarplatte 150 der einen elektrochemischen Zelle an und andererseits an die erste Bipolarplatte 148 der anderen elektrochemischen Zelle 12 an.

Das Trennelement 178 ist plattenförmig ausgebildet, erstreckt sich quer zur Längsachse 14 und umfasst am Rand jeweils zwei paarweise um 90° nach oben beziehungsweise nach unten umgebogene Abdichtwände 180 und 182 beziehungsweise 184 und 186. Das Trennelement 178 mit den Abdichtwänden 180, 182, 184 und 186 ist einstückig aus einem fluiddichten und elektrisch leitfähigen Material ausgebildet.

Das Trennelement 178 ist derart angeordnet, dass die Abdichtwand 180 die erste Längsseitenfläche 170 abdichtet und die Abdichtwand 182 die zweite Längsseitenfläche 172. Ferner dichtet die Abdichtwand 184 die dritte Längsseitenfläche 166 ab und die Abdichtwand 186 die vierte Längsseitenfläche 168.

In der beschriebenen Weise dichtet das Trennelement 178 zwei voneinander weg weisende Längsseitenflächen 170 und 172 der zweiten Bipolarplatte 150 einer elektrochemischen Zelle 12 und zwei voneinander weg weisende Längsseitenflächen 166 und 168 der ersten Bipolarplatte 148 der anderen, benachbart angeordneten elektrochemischen Zelle 12 ab.

Die Bipolarplatten 148 und 150 weisen von den Längsseitenflächen 162, 164, 166 und 168 beziehungsweise 170, 172, 174 und 176 zurückgesetzte Ausnehmungen 188 und 190 auf, die die ersten und zweiten Elektroden 154 und 158 formschlüssig aufnehmen.

Ein Teil der Protonenaustauschmembran 152, beispielsweise ein speziell in die Membran-Elektroden-Einheit 146 eingearbeiteter Tragrahmen aus einem geeigneten Material wie insbesondere Kapton®, ragt über die Ausnehmungen 188 und 190 hinaus bis an die Längsseitenflächen 162, 164, 166 und 168 beziehungsweise 170, 172, 174 und 176 heran.

Im Bereich zwischen den Ausnehmungen 188 und 190 sind beidseits der Protonenaustauschmembran 152 ein umlaufendes Dichtelement 192 und 194 angeordnet, welche sich einerseits von den Ausnehmungen 188 beziehungsweise 190 bis an die Längsseitenflächen 162, 164, 166 und 168 beziehungsweise 170, 172, 174 und 176 heran erstrecken.

Der Zellenstapel 16 der elektrochemischen Energieumwandlungsvorrichtung 10 ist wie beschrieben im Querschnitt viereckig ausgebildet. Alternative Ausgestaltungen von elektrochemischen Energieumwandlungsvorrichtungen 10 sehen Zellenstapel 16 vor, die dreieckig, fünfeckig, sechseckig oder achteckig ausgebildet.

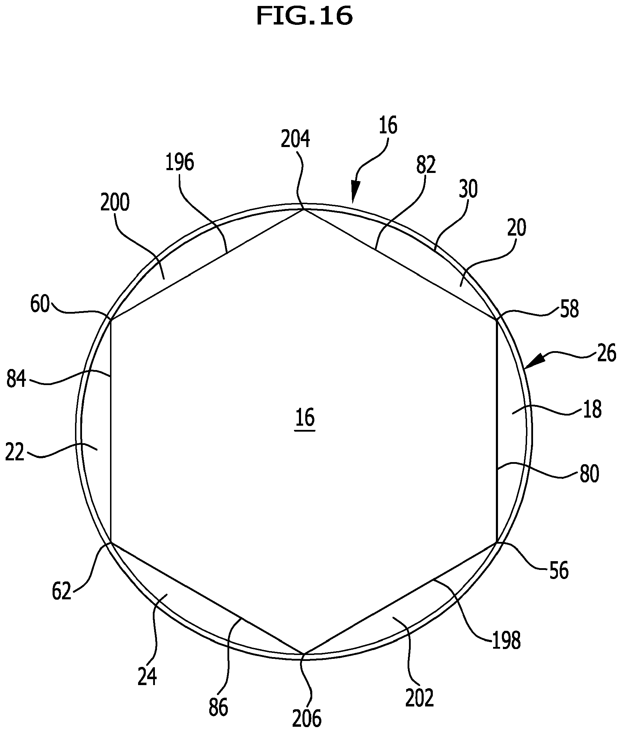

Beispielsweise zeigt Figur 16 ein alternatives Ausführungsbeispiel einer elektrochemischen Energieumwandlungsvorrichtung 10 mit einem sechseckigen Zellenstapel 16, welcher im Hülsenabschnitt 30 angeordnet ist.

Der sechseckige Zellenstapel 16 umfasst somit nicht nur vier Längsseitenflächen 80, 82, 84 und 86, sondern zusätzlich zwei weitere Längsseitenflächen 196 und 198. Dadurch werden zusätzlich zu den Fluidkanälen 18, 20, 22 und 24 zwei insbesondere als Kühlkanäle 200 und 202 nutzbare Kanäle ausgebildet, die beispielsweise mit einem Kühlfluid durchströmbar sind zum Kühlen des Zellenstapels 16 während des Betriebs der elektrochemischen Zellen 12.

Ebenso wie die Fluidkanäle 18, 20, 22 und 24 sind die Kühlkanäle 200 und 202 abschnittsweise vom Zellenstapel 16 und abschnittsweise vom Gehäuse 26 begrenzt, wobei der Wandabschnitt des Gehäuses 26 sich zur Ausbildung der Kühlkanäle 200 zwischen zwei Längskanten 204 und 60 beziehungsweise 206 und 56 der zugeordneten Längsseitenflächen 196 und 198 erstreckt.

Die die Kühlkanäle 200 und 202 begrenzenden Längsseitenflächen 196 und 198 des Zellenstapels 16 sind fluiddicht verschlossen, so dass durch die Kühlkanäle 200 und 202 strömende Kühlmedium nicht in die elektrochemischen Zellen 12 gelangen kann.

Die mindestens zwei oder mehreren elektrochemischen Zellen 12 der elektrochemischen Energieumwandlungsvorrichtung 10 sind entweder in Form von Brennstoffzellen oder in Form von Elektrolysezellen ausgebildet. So kann die elektrochemische Energieumwandlungsvorrichtung 10 entweder zum Umwandeln chemischer Energie in elektrische Energie oder zum Umwandeln elektrischer Energie in chemische Energie verwendet werden.

Zum Betrieb der elektrochemischen Energieumwandlungsvorrichtung 10 zum Erzeugen elektrischer Energie aus chemischer Energie kann beispielsweise durch die erste Anschlussleitung 100 Luft oder reiner Sauerstoff zugeführt werden, wobei überschüssige Luft oder überschüssiger reiner Sauerstoff durch die dritte Anschlussleitung 104 abgeführt werden kann. Wasserstoff beziehungsweise ein wasserstoffreiches Gemisch kann beispielsweise durch die vierte Anschlussleitung 106 zugeführt werden und überschüssiger Wasserstoff beziehungsweise ein Überschuss des wasserstoffreichen Gemischs kann durch die zweite Anschlussleitung 102 abgeführt werden.

Zum Umwandeln elektrischer Energie in chemische Energie kann beispielsweise durch die erste Anschlussleitung 100 Wasser zugeführt werden. Durch die Elektrolyse des Wassers entstehender Wasserstoff kann insbesondere über die zweite Anschlussleitung 102 und die vierte Anschlussleitung 106 abgeführt werden. Überschüssiges Wasser und bei der Elektrolyse gebildeter Sauerstoff können über die dritte Anschlussleitung 104 abgeführt werden.

Die elektrochemische Energieumwandlungsvorrichtung 10 eignet sich ferner auch zur Verwendung als Elektronenpumpe, beispielsweise zum Erzeugen von Druck eines Brennstoffs für Anwender, beispielsweise in einem Autotank. Dabei kann beispielsweise ein Wasserstoff-Gemisch durch die erste Anschlussleitung 100 mit einem Druck von ungefähr 2 bar zugeführt werden. Eine Restmischung mit wenig bis keinem Wasserstoff kann durch die dritte Anschlussleitung 104 abgeleitet werden. An der zweiten Anschlussleitung 102 und der vierten Anschlussleitung 106 steht dann Wasserstoff unter hohem Druck mit bis zu 900 bar zur Verfügung.

Die oben beschriebenen Ausführungsbeispiele elektrochemischer Energieumwandlungsvorrichtungen 10 ermöglichen einen hocheffizienten Betrieb derselben sowie einen vereinfachten Aufbau. Insbesondere die Ausbildung der Fluidkanäle 18, 20, 22 und 24 sowie gegebenenfalls der Kühlkanäle 200 und 202 ist im Vergleich zum Stand der Technik signifikant vereinfacht.

Ferner ist bei den oben beschriebenen Ausführungsbeispielen elektrochemischer Energieumwandlungsvorrichtungen 10, insbesondere bei einer Brennstoffzelle, die Flächenausnutzung der Bipolarplatten 148 und 150 gegenüber einer aktiven Fläche der Brennstoffzelle stark verbessert. Bei herkömmlichen Brennstoffzellen werden Versorgungskanäle durch die gestapelten Bipolarplatten 148 und 150 hindurch ausgebildet, so dass sich eine Struktur mit einer vergleichsweise hohen Wandstärke bestehend aus einzelnen Segmenten ergibt. Durch die vorgeschlagene Weiterbildung bekannter elektrochemischer Energieumwandlungsvorrichtungen 10 wird deren gravimetrische Leistungsdichte gesteigert.

### Bezugszeichenliste

- 10: Energieumwandlungsvorrichtung
- 12: elektrochemische Zelle
- 14: Längsachse
- 16: Zellenstapel
- 18: erster Fluidkanal
- 20: zweiter Fluidkanal
- 22: dritter Fluidkanal
- 24: vierter Fluidkanal
- 26: Gehäuse
- 28: Innenraum
- 30: Hülsenabschnitt
- 32: erstes Ende
- 34: zweites Ende
- 36: Gehäusedeckel
- 38: erster Ringflansch
- 40: zweiter Ringflansch
- 42: dritter Ringflansch
- 44: Bohrung
- 46: Dichtelement
- 48: Schraubverbindung
- 50: Gewindebolzen
- 52: Gewindemutter
- 54: Unterlegscheibe
- 56: Längskante
- 58: Längskante
- 60: Längskante
- 62: Längskante
- 64: Dichtelement
- 66: Längsseitenfläche
- 68: erste Dichtfläche
- 70: zweite Dichtfläche
- 72: Wandfläche
- 74: Dichtfläche
- 76: Längsseitenfläche
- 78: Längsseitenfläche
- 80: Längsseitenfläche
- 82: Längsseitenfläche
- 84: Wandabschnitt
- 86: Wandabschnitt
- 88: Wandabschnitt
- 90: Wandabschnitt
- 92: erster Fluidanschluss
- 94: zweiter Fluidanschluss
- 96: dritter Fluidanschluss
- 98: vierter Fluidanschluss
- 100: erste Anschlussleitung
- 102: zweite Anschlussleitung
- 104: dritte Anschlussleitung
- 106: vierte Anschlussleitung
- 108: Spanneinrichtung
- 110: Spannelement
- 112: Spannfläche
- 114: Durchbrechung
- 116: Platte
- 118: Scheibe
- 120: Unterseite
- 122: Oberseite
- 124: Stutzen
- 128: Stutzen
- 130: Durchbrechung
- 132: Innengewinde
- 134: Spannbolzen
- 136: Kopf
- 138: Außengewindeabschnitt
- 140: zylindrischer Abschnitt
- 141: Lagerkopf
- 142: Kontermutter
- 144: Unterlegscheibe
- 146: Membran-Elektroden-Einheit
- 148: erste Bipolarplatte
- 150: zweite Bipolarplatte
- 152: Protonenaustauschmembran
- 154: erste Elektrode
- 156: Anode
- 158: zweite Elektrode
- 160: Kathode
- 162: erste Längsseitenfläche
- 164: zweite Längsseitenfläche
- 166: dritte Längsseitenfläche
- 168: vierte Längsseitenfläche
- 170: erste Längsseitenfläche
- 172: zweite Längsseitenfläche
- 174: dritte Längsseitenfläche
- 176: vierte Längsseitenfläche
- 178: Trennelement
- 180: Abdichtwand
- 182: Abdichtwand
- 184: Abdichtwand
- 186: Abdichtwand
- 188: Ausnehmung
- 190: Ausnehmung
- 192: Dichtelement
- 194: Dichtelement
- 196: Längsseitenfläche
- 198: Längsseitenfläche
- 200: Kühlkanal
- 202: Kühlkanal
- 204: Längskante
- 206: Längskante

## Patentansprüche

1. Elektrochemische Energieumwandlungsvorrichtung (10) umfassend mindestens zwei elektrochemische Zellen (12), welche aufeinander gestapelt sind zur Ausbildung eines eine Längsachse (14) definierenden Zellenstapels (16), wobei mindestens zwei parallel zur Längsachse (14) verlaufende Fluidkanäle (18, 20, 22, 24) vorgesehen sind zum Zuführen und Abführen von Fluiden zu und von den mindestens zwei elektrochemischen Zellen (12), wobei der Zellenstapel (16) in einem Gehäuse (26) angeordnet ist, wobei die mindestens zwei Fluidkanäle (18, 20, 22, 24) mindestens abschnittsweise vom Zellenstapel (16) und mindestens abschnittsweise vom Gehäuse (26) begrenzt sind, wobei der Zellenstapel (16) parallel zur Längsachse (14) verlaufende Längskanten (56, 58, 60, 62) aufweist, wobei die Längskanten (56, 58, 60, 62) und das Gehäuse (26) relativ zueinander abgedichtet sind, wobei zum Abdichten des Zellenstapels (16) und des Gehäuses (26) jeder Längskante (56, 58, 60, 62) mindestens ein sich parallel zur Längskante (56, 58, 60, 62) erstreckendes Dichtelement (64, 66) zugeordnet ist, **dadurch gekennzeichnet, dass** das mindestens eine Dichtelement (64, 66) eine in Richtung auf den Fluidkanal (18, 20, 22, 24) hin weisende konkav gekrümmte Dichtfläche (74) definiert.

2. Elektrochemische Energieumwandlungsvorrichtung nach Anspruch 1, **dadurch gekennzeichnet, dass** der Zellenstapel (16) mehrere sich parallel zur Längsachse (14) erstreckende Längsseitenflächen (76, 78, 80, 82) definiert, dass jede Längsseitenfläche (76, 78, 80, 82) von zwei Längskanten (56, 58, 60, 62) begrenzt ist und dass jeder der mindestens zwei Fluidkanäle (18, 20, 22, 24) von einer Längsseitenfläche (76, 78, 80, 82) und einem Wandabschnitt (84, 86, 88, 90) des Gehäuses begrenzt ist, welcher Wandabschnitt (84, 86, 88, 90) sich zwischen den zwei Längskanten (56, 58, 60, 62) der zugeordneten Längsseitenfläche (76, 78, 80, 82) erstreckt,
wobei insbesondere mindestens eine der mehreren Längsseitenflächen (76, 78, 80, 82) eben oder im Wesentlichen eben ausgebildet ist.

3. Elektrochemische Energieumwandlungsvorrichtung nach einem der voranstehenden Ansprüche, **dadurch gekennzeichnet, dass** das Gehäuse (26) einen kreisförmigen oder im Wesentlichen kreisförmigen oder ovalen oder im Wesentlichen ovalen Querschnitt definiert.

4. Elektrochemische Energieumwandlungsvorrichtung nach einem der voranstehenden Ansprüche, **dadurch gekennzeichnet, dass** das Gehäuse (26) einen den Zellenstapel (16) bezogen auf die Längsachse (14) umgebenden rohrförmigen Hülsenabschnitt (30) umfasst.

5. Elektrochemische Energieumwandlungsvorrichtung nach Anspruch 4, **dadurch gekennzeichnet, dass** der Hülsenabschnitt (30) ein erstes Ende (32) und ein in entgegengesetzter Richtung weisendes zweites Ende (34) aufweist und dass das erste und das zweite Ende (32, 34) verschlossen sind.

6. Elektrochemische Energieumwandlungsvorrichtung nach Anspruch 5,
**dadurch gekennzeichnet, dass** das erste Ende (32) und/oder das zweite Ende (34) mit einem Gehäusedeckel (36) verschlossen sind,
wobei insbesondere der Gehäusedeckel (36)
a) in Form einer halben Hohlkugel oder im Wesentlichen in Form einer halben Hohlkugel ausgebildet ist
und/oder
b) mit dem Hülsenabschnitt (30) lösbar verbunden ist, insbesondere durch Verschrauben oder Verklemmen.

7. Elektrochemische Energieumwandlungsvorrichtung nach einem der voranstehenden Ansprüche, **gekennzeichnet durch** eine Spanneinrichtung (108) zum Verspannen des Zellenstapels (16) in einer Spannrichtung parallel zur Längsachse (14).

8. Elektrochemische Energieumwandlungsvorrichtung nach Anspruch 7,
**dadurch gekennzeichnet, dass** die Spanneinrichtung (108) mindestens zwei zusammenwirkende Spannelemente (110) aufweist und dass der Zellenstapel (16) zwischen den zwei Spannelementen (110) angeordnet ist,

9. Elektrochemische Energieumwandlungsvorrichtung nach Anspruch 8,
**dadurch gekennzeichnet, dass**
a) die mindestens zwei Spannelemente (110) jeweils eine Spannfläche (112) aufweisen und dass die Spannflächen (112) der mindestens zwei Spannelemente (110) aufeinander zu weisen und direkt oder indirekt am Zellenstapel (16) anliegen
und/oder
b) sich jedes Spannelement (110) an einem Gehäusedeckel (36) abstützt.

10. Elektrochemische Energieumwandlungsvorrichtung nach einem der voranstehenden Ansprüche, **dadurch gekennzeichnet, dass** jede der mindestens zwei elektrochemischen Zellen (12) eine zwischen einer ersten elektrisch leitfähigen Bipolarplatte (148) und einer zweiten elektrisch leitfähigen Bipolarplatte (150) angeordnete Membran-Elektroden-Einheit (146) umfasst.

11. Elektrochemische Energieumwandlungsvorrichtung nach Anspruch 10, **dadurch gekennzeichnet, dass**
a) die Bipolarplatten (148, 150) fluiddurchlässig und/oder porös ausgebildet sind und/oder ein Flussfeld mit einer Mehrzahl von Strömungskanälen umfassen
und/oder
b) jede erste Bipolarplatte (148) eine erste Längsseitenfläche (162) und eine zweite Längsseitenfläche (164) definiert, dass die erste Längsseitenfläche (162) an einen ersten Fluidkanal (18) angrenzt und mit diesem fluidwirksam in Verbindung steht, dass die zweite Längsseitenfläche (164) an einen zweiten Fluidkanal (22) angrenzt und mit diesem fluidwirksam in Verbindung steht und dass der erste Fluidkanal (18) und der zweite Fluidkanal (22) relativ zueinander abgedichtet sind,
wobei insbesondere jede erste Bipolarplatte (148) eine dritte Längsseitenfläche (166) und eine vierte Längsseitenfläche (168) definiert, dass die dritte Längsseitenfläche (166) an einen dritten Fluidkanal (20) angrenzt und gegenüber diesem abgedichtet ist und dass die vierte Längsseitenfläche (168) an einen vierten Fluidkanal (24) angrenzt und gegenüber diesem abgedichtet ist,
und/oder
c) jede zweite Bipolarplatte (150) eine erste Längsseitenfläche (170) und eine zweite Längsseitenfläche (172) definiert, dass die erste Längsseitenfläche (170) an den ersten Fluidkanal (18) angrenzt und gegenüber diesem abgedichtet ist und dass die zweite Längsseitenfläche (172) an den zweiten Fluidkanal (22) angrenzt und gegenüber diesem abgedichtet ist,
wobei insbesondere jede zweite Bipolarplatte (150) eine dritte Längsseitenfläche (174) und eine vierte Längsseitenfläche (176) definiert, dass die dritte Längsseitenfläche an den dritten Fluidkanal (20) angrenzt und mit diesem fluidwirksam in Verbindung steht, dass die vierte Längsseitenfläche (176) an den vierten Fluidkanal (24) angrenzt und mit diesem fluidwirksam in Verbindung steht und dass der dritte Fluidkanal (20) und der vierte Fluidkanal (24) relativ zueinander abgedichtet sind,
und/oder
d) der erste Fluidkanal (18) und der zweite Fluidkanal (20) und der dritte Fluidkanal (22) und der vierte Fluidkanal (24) relativ zueinander abgedichtet sind.

12. Elektrochemische Energieumwandlungsvorrichtung nach einem der voranstehenden Ansprüche, **gekennzeichnet durch** mindestens einen Kühlkanal (200, 202) zum Durchströmen mit einem Kühlfluid, welcher Kühlkanal (200, 202) mindestens abschnittsweise vom Zellenstapel (16) und mindestens abschnittsweise vom Gehäuse (26) begrenzt ist,
wobei insbesondere der mindestens eine Kühlkanal (200, 202) von einer Längsseitenfläche (196, 198) und einem Wandabschnitt des Gehäuses (26) begrenzt ist, welcher Wandabschnitt sich zwischen den zwei Längskanten (204, 60; 206; 56) der zugeordneten Längsseitenfläche (196, 198) erstreckt,
wobei weiter insbesondere die den mindestens einen Kühlkanal (200, 202) begrenzende Längsseitenfläche (196, 198) des Zellenstapels (16) fluiddicht verschlossen ist.

13. Elektrochemische Energieumwandlungsvorrichtung nach einem der voranstehenden Ansprüche, **dadurch gekennzeichnet, dass**
a) die Fluidkanäle (18, 20, 22, 24) längs ihrer Erstreckung parallel zur Längsachse (14) ohne umlaufende Dichtelemente ausgebildet sind
und/oder
b) zwischen zwei elektrochemischen Zellen (12) des Zellenstapels (16) ein Trennelement (178) angeordnet ist, welches einerseits an einer Bipolarplatte (150) der einen elektrochemischen Zelle (12) angrenzt und welches andererseits an einer Bipolarplatte (148) der anderen elektrochemischen Zelle (12) angrenzt,
wobei insbesondere
b1) das Trennelement (178) zwei voneinander weg weisende Längsseitenflächen (170, 172) der Bipolarplatte (150) der einen elektrochemischen Zelle (12) und zwei voneinander weg weisende Längsseitenflächen (166, 168) der Bipolarplatte (148) der anderen elektrochemischen Zelle (12) abdichtet
und/oder
b2) die Bipolarplatte (148) der einen elektrochemischen Zelle (12) eine erste Bipolarplatte (148) derselben definiert und dass die Bipolarplatte (150) der anderen elektrochemischen Zelle (12) eine zweite Bipolarplatte (150) definiert und/oder
b3) die Membran-Elektroden-Einheit (146) eine elektrisch isolierende Protonen-Austausch-Membran (152) umfasst und dass die Protonen-Austausch-Membran (152) zwischen zwei Trennelementen (178) angeordnet ist und diese gegeneinander elektrisch isoliert
und/oder
b4) das Trennelement (178) fluiddicht und elektrisch leitfähig ausgebildet ist.

14. Elektrochemische Energieumwandlungsvorrichtung nach einem der voranstehenden Ansprüche, **dadurch gekennzeichnet, dass**
a) am Gehäuse (26) mindestens zwei Fluidanschlüsse (92, 94, 96, 98) angeordnet oder ausgebildet sind und dass jeder der zwei Fluidanschlüsse (92, 94, 96, 98) mit einem der mindestens zwei Fluidkanäle (18, 20, 22, 24) fluidwirksam verbunden ist
und/oder
b) jedem Fluidkanal (18, 20, 22, 24) mehrere, insbesondere zwei, drei
oder vier, Fluidanschlüsse (92, 94, 96, 98) zugeordnet sind und/oder
c) das Gehäuse (26) druckstabil ausgebildet ist
und/oder
d) der Zellenstapel (16) bezogen auf die Längsachse (14) eckig ausgebildet ist, insbesondere drei-, vier-, fünf-, sechs- oder achteckig und/oder
e) die mindestens zwei elektrochemischen Zellen (12) in Form von Brennstoffzellen oder in Form von Elektrolysezellen oder in Form von Protonenpumpen ausgebildet sind.

15. Verwendung einer elektrochemischen Energieumwandlungsvorrichtung (10) nach einem der voranstehenden Ansprüche zum Umwandeln chemischer Energie in elektrische Energie oder zum Umwandeln elektrischer Energie in chemische Energie oder als Protonenpumpe.

## Claims

1. Electrochemical energy conversion device (10) comprising at least two electrochemical cells (12), which are stacked on one another to form a cell stack (16) defining a longitudinal axis (14), wherein at least two fluid channels (18, 20, 22, 24) running parallel to the longitudinal axis (14) are provided for feeding and discharging fluids to and from the at least two electrochemical cells (12), wherein the cell stack (16) is arranged in a housing (26), wherein the at least two fluid channels (18, 20, 22, 24) are delimited at least in sections by the cell stack (16) and at least in sections by the housing (26), wherein the cell stack (16) has longitudinal edges (56, 58, 60, 62) running parallel to the longitudinal axis (14), wherein the longitudinal edges (56, 58, 60, 62) and the housing (26) are sealed relative to one another, wherein each longitudinal edge (56, 58, 60, 62) is associated with at least one sealing element (64, 66) extending in parallel to the longitudinal edge (56, 58, 60, 62) for sealing the cell stack (16) and the housing (26), **characterized in that** the at least one sealing element (64, 66) defines a concavely curved sealing face (74) facing in the direction toward the fluid channel (18, 20, 22, 24).

2. Electrochemical energy conversion device in accordance with Claim 1, **characterized in that** the cell stack (16) defines a plurality of longitudinal side faces (76, 78, 80, 82) extending in parallel to the longitudinal axis (14), **in that** each longitudinal side face (76, 78, 80, 82) is delimited by two longitudinal edges (56, 58, 60, 62), and **in that** each of the at least two fluid channels (18, 20, 22, 24) is delimited by a longitudinal side face (76, 78, 80, 82) and a wall portion (84, 86, 88, 90) of the housing, which wall portion (84, 86, 88, 90) extends between the two longitudinal edges (56, 58, 60, 62) of the associated longitudinal side face (76, 78, 80, 82),
wherein in particular at least one of the plurality of longitudinal side faces (76, 78, 80, 82) is of planar or substantially planar configuration.

3. Electrochemical energy conversion device in accordance with any one of the preceding Claims, **characterized in that** the housing (26) defines a circular or substantially circular or oval or substantially oval cross section.

4. Electrochemical energy conversion device in accordance with any one of the preceding Claims, **characterized in that** the housing (26) comprises a tube-shaped sleeve portion (30) surrounding the cell stack (16) with respect to the longitudinal axis (14).

5. Electrochemical energy conversion device in accordance with Claim 4, **characterized in that** the sleeve portion (30) has a first end (32) and a second end (34) facing in the opposite direction, and **in that** the first and the second end (32, 34) are closed.

6. Electrochemical energy conversion device in accordance with Claim 5, **characterized in that** the first end (32) and/or the second end (34) are closed with a housing lid (36),
wherein in particular the housing lid (36)
a) is configured in the form of a half hollow sphere or substantially in the form of a half hollow sphere
and/or
b) is releasably connected to the sleeve portion (30), in particular by screwing or clamping.

7. Electrochemical energy conversion device in accordance with any one of the preceding Claims, **characterized by** a clamping device (108) for clamping the cell stack (16) in a clamping direction parallel to the longitudinal axis (14).

8. Electrochemical energy conversion device in accordance with Claim 7, **characterized in that** the clamping device (108) has at least two cooperating clamping elements (110), and **in that** the cell stack (16) is arranged between the two clamping elements (110).

9. Electrochemical energy conversion device in accordance with Claim 8, **characterized in that**
a) the at least two clamping elements (110) each have a clamping face (112), and **in that** the clamping faces (112) of the at least two clamping elements (110) face toward one another and abut directly or indirectly against the cell stack (16)
and/or
b) each clamping element (110) is supported on the housing lid (36).

10. Electrochemical energy conversion device in accordance with any one of the preceding Claims, **characterized in that** each of the at least two electrochemical cells (12) comprises a membrane electrode unit (146) arranged between a first electrically conductive bipolar plate (148) and a second electrically conductive bipolar plate (150).

11. Electrochemical energy conversion device in accordance with Claim 10, **characterized in that**
a) the bipolar plates (148, 150) are configured to be fluid-permeable and/or porous and/or comprise a flow field with a plurality of flow channels
and/or
b) each first bipolar plate (148) defines a first longitudinal side face (162) and a second longitudinal side face (164), **in that** the first longitudinal side face (162) adjoins a first fluid channel (18) and is in fluidic connection therewith, **in that** the second longitudinal side face (164) adjoins a second fluid channel (22) and is in fluidic connection therewith and **in that** the first fluid channel (18) and the second fluid channel (22) are sealed relative to one another, wherein in particular each first bipolar plate (148) defines a third longitudinal side face (166) and a fourth longitudinal side face (168), **in that** the third longitudinal side face (166) adjoins a third fluid channel (20) and is sealed relative thereto, and **in that** the fourth longitudinal side face (168) adjoins a fourth fluid channel (24) and is sealed relative thereto,
and/or
c) each second bipolar plate (150) defines a first longitudinal side face (170) and a second longitudinal side face (172), **in that** the first longitudinal side face (170) adjoins the first fluid channel (18) and is sealed relative thereto, and **in that** the second longitudinal side face (172) adjoins the second fluid channel (22) and is sealed relative thereto,
wherein in particular each second bipolar plate (150) defines a third longitudinal side face (174) and a fourth longitudinal side face (176), **in that** the third longitudinal side face adjoins the third fluid channel (20) and is in fluidic connection therewith, **in that** the fourth longitudinal side face (176) adjoins the fourth fluid channel (24) and is in fluidic connection therewith, and **in that** the third fluid channel (20) and the fourth fluid channel (24) are sealed relative to one another,
and/or
d) the first fluid channel (18) and the second fluid channel (20) and the third fluid channel (22) and the fourth fluid channel (24) are sealed relative to one another.

12. Electrochemical energy conversion device in accordance with any one of the preceding Claims, **characterized by** at least one cooling channel (200, 202) for through-flow by a cooling fluid, which cooling channel (200, 202) is delimited at least in sections by the cell stack (16) and at least in sections by the housing (26),
wherein in particular the at least one cooling channel (200, 202) is delimited by a longitudinal side face (196, 198) and a wall portion of the housing (26), which wall portion extends between the two longitudinal edges (204, 60; 206; 56) of the associated longitudinal side face (196, 198),
wherein further in particular the longitudinal side face (196, 198) of the cell stack (16) delimiting the at least one cooling channel (200, 202) is closed in a fluid-tight manner.

13. Electrochemical energy conversion device in accordance with any one of the preceding Claims, **characterized in that**
a) the fluid channels (18, 20, 22, 24) are configured without circumferential sealing elements along their extent in parallel to the longitudinal axis (14)
and/or
b) arranged between two electrochemical cells (12) of the cell stack (16) is a separating element (178), which, on the one hand, adjoins a bipolar plate (150) of the one electrochemical cell (12) and which, on the other hand, adjoins a bipolar plate (148) of the other electrochemical cell (12),
wherein in particular
b1) the separating element (178) seals two longitudinal side faces (170, 172), facing away from one another, of the bipolar plate (150) of the one electrochemical cell (12) and two longitudinal side faces (166, 168), facing away from one another, of the bipolar plate (148) of the other electrochemical cell (12)
and/or
b2) the bipolar plate (148) of the one electrochemical cell (12) defines a first bipolar plate (148) thereof and **in that** the bipolar plate (150) of the other electrochemical cell (12) defines a second bipolar plate (150)
and/or
b3) the membrane electrode unit (146) comprises an electrically insulating proton exchange membrane (152) and **in that** the proton exchange membrane (152) is arranged between two separating elements (178) and electrically insulates same from one another
and/or
b4) the separating element (178) is of fluid-tight and electrically conductive configuration.

14. Electrochemical energy conversion device in accordance with any one of the preceding Claims, **characterized in that**
a) at least two fluid ports (92, 94, 96, 98) are arranged or formed on the housing (26), and **in that** each of the two fluid ports (92, 94, 96, 98) is fluidically connected to one of the at least two fluid channels (18, 20, 22, 24)
and/or
b) a plurality, in particular two, three or four, of fluid ports (92, 94, 96, 98) are associated with each fluid channel (18, 20, 22, 24)
and/or
c) the housing (26) is of pressure-stable configuration
and/or
d) the cell stack (16) is of angular configuration, in particular triangular, quadrangular, pentagonal, hexagonal, or octagonal, in relation to the longitudinal axis (14)
and/or
e) the at least two electrochemical cells (12) are configured in the form of fuel cells or in the form of electrolysis cells or in the form of proton pumps.

15. Use of an electrochemical energy conversion device (10) in accordance with any one of the preceding Claims for converting chemical energy into electrical energy or for converting electrical energy into chemical energy or as a proton pump.

## Revendications

1. Dispositif de conversion d'énergie électrochimique (10) comprenant au moins deux cellules électrochimiques (12), lesquelles sont empilées l'une sur l'autre pour réaliser une pile de cellules (16) définissant un axe longitudinal (14), dans lequel sont prévus au moins deux canaux de fluide (18, 20, 22, 24) s'étendant de manière parallèle par rapport à l'axe longitudinal (14) pour amener et évacuer des fluides vers les et des au moins deux cellules électrochimiques (12), dans lequel la pile de cellules (16) est disposée dans un boîtier (26), dans lequel les au moins deux canaux de fluide (18, 20, 22, 24) sont délimités au moins par endroits par la pile de cellules (16) et au moins par endroits par le boîtier (26), dans lequel la pile de cellules (16) présente des arêtes longitudinales (56, 58, 60, 62) s'étendant de manière parallèle par rapport à l'axe longitudinal (14), dans lequel les arêtes longitudinales (56, 58, 60, 62) et le boîtier (26) sont étanchéifiés l'un par rapport à l'autre, dans lequel au moins un élément d'étanchéité (64, 66) s'étendant de manière parallèle par rapport à l'arête longitudinale (56, 58, 60, 62) est associé à chaque arête longitudinale (56, 58, 60, 62) pour étanchéifier la pile de cellules (16) et le boîtier (26), **caractérisé en ce que** l'au moins un élément d'étanchéité (64, 66) définit une surface d'étanchéité (74) incurvée de manière concave pointant en direction du canal de fluide (18, 20, 22, 24).

2. Dispositif de conversion d'énergie électrochimique selon la revendication 1, **caractérisé en ce que** la pile de cellules (16) définit plusieurs faces latérales longitudinales (76, 78, 80, 82) s'étendant de manière parallèle par rapport à l'axe longitudinal (14), que chaque face latérale longitudinale (76, 78, 80, 82) est délimitée par deux arêtes longitudinales (56, 58, 60, 62), et que chacun des au moins deux canaux de fluide (18, 20, 22, 24) est délimité par une face latérale longitudinale (76, 78, 80, 82) et une section de paroi (84, 86, 88, 90) du boîtier, laquelle section de paroi (84, 86, 88, 90) s'étend entre les deux arêtes longitudinales (56, 58, 60, 62) de la face latérale longitudinale (76, 78, 80, 82) associée,
dans lequel en particulier au moins une des plusieurs faces latérales longitudinales (76, 78, 80, 82) est réalisée de manière plane ou de manière sensiblement plane.

3. Dispositif de conversion d'énergie électrochimique selon l'une quelconque des revendications précédentes, **caractérisé en ce que** le boîtier (26) définit une section transversale circulaire ou sensiblement circulaire ou ovale ou sensiblement ovale.

4. Dispositif de conversion d'énergie électrochimique selon l'une quelconque des revendications précédentes, **caractérisé en ce que** le boîtier (26) comprend une section de douille (30) tubulaire entourant la pile de cellules (16) par rapport à l'axe longitudinal (14).

5. Dispositif de conversion d'énergie électrochimique selon la revendication 4, **caractérisé en ce que** la section de douille (30) présente une première extrémité (32) et une seconde extrémité (34) pointant dans une direction opposée, et que la première et la seconde extrémité (32, 34) sont fermées.

6. Dispositif de conversion d'énergie électrochimique selon la revendication 5, **caractérisé en ce que** la première extrémité (32) et/ou la seconde extrémité (34) sont fermées par un couvercle de boîtier (36),
dans lequel en particulier le couvercle de boîtier (36)
a) est réalisé sous la forme d'une demi-sphère creuse ou sensiblement sous la forme d'une demi-sphère creuse,
et/ou
b) est relié de manière amovible à la section de douille (30), en particulier par vissage ou serrage.

7. Dispositif de conversion d'énergie électrochimique selon l'une quelconque des revendications précédentes, **caractérisé par** un système de serrage (108) servant à serrer la pile de cellules (16) dans une direction de serrage de manière parallèle par rapport à l'axe longitudinal (14).

8. Dispositif de conversion d'énergie électrochimique selon la revendication 7, **caractérisé en ce que** le système de serrage (108) présente au moins deux éléments de serrage (110) qui coopèrent, et que la pile de cellules (16) est disposée entre les deux éléments de serrage (110).

9. Dispositif de conversion d'énergie électrochimique selon la revendication 8, **caractérisé en ce que**
a) les au moins deux éléments de serrage (110) présentent respectivement une face de serrage (112) et que les faces de serrage (112) des au moins deux éléments de serrage (110) pointent l'une en direction de l'autre et reposent directement ou indirectement sur la pile de cellules (16)
et/ou
b) que chaque élément de serrage (110) prend appui sur un couvercle de boîtier (36).

10. Dispositif de conversion d'énergie électrochimique selon l'une quelconque des revendications précédentes, **caractérisé en ce que** chacune des au moins deux cellules électrochimiques (12) comprend une unité membrane-électrodes (146) disposée entre une première plaque bipolaire (148) électriquement conductrice et une deuxième plaque bipolaire (150) électriquement conductrice.

11. Dispositif de conversion d'énergie électrochimique selon la revendication 10, **caractérisé en ce que**
a) les plaques bipolaires (148, 150) sont réalisées de manière à laisser passer les fluides et/ou de manière poreuse et/ou comprennent un champ de flux avec une multitude de canaux d'écoulement,
et/ou
b) chaque première plaque bipolaire (148) définit une première face latérale longitudinale (162) et une deuxième face latérale longitudinale (164), que la première face latérale longitudinale (162) jouxte un premier canal de fluide (18) et est en communication fluidique avec celui-ci, que la deuxième face latérale longitudinale (164) jouxte le deuxième canal de fluide (22) et est en communication fluidique avec celui-ci, et que le premier canal de fluide (18) et le deuxième canal de fluide (22) sont étanchéifiés l'un par rapport à l'autre,
dans lequel en particulier chaque première plaque bipolaire (148) définit une troisième face latérale longitudinale (166) et une quatrième face latérale longitudinale (168), que la troisième face latérale longitudinale (166) jouxte un troisième canal de fluide (20) et est étanchéifiée par rapport à celui-ci, et que la quatrième face latérale longitudinale (168) jouxte un quatrième canal de fluide (24) et est étanchéifiée par rapport à celui-ci,
et/ou
c) chaque deuxième plaque bipolaire (150) définit une première face latérale longitudinale (170) et une deuxième face latérale longitudinale (172), que la première face latérale longitudinale (170) jouxte le premier canal de fluide (18) et est étanchéifiée par rapport à celui-ci, et que la deuxième face latérale longitudinale (172) jouxte le deuxième canal de fluide (22) et est étanchéifiée par rapport à celui-ci, dans lequel en particulier chaque deuxième plaque bipolaire (150) définit une troisième face latérale longitudinale (174) et une quatrième face latérale longitudinale (176), que la troisième face latérale longitudinale jouxte le troisième canal de fluide (20) et est en communication fluidique avec celui-ci, que la quatrième face latérale longitudinale (176) jouxte le quatrième canal de fluide (24) et est en communication fluidique avec celui-ci, et que le troisième canal de fluide (20) et le quatrième canal de fluide (24) sont étanchéifiés l'un par rapport à l'autre,
et/ou
d) le premier canal de fluide (18) et le deuxième canal de fluide (20) et le troisième canal de fluide (22) et le quatrième canal de fluide (24) sont étanchéifiés les uns par rapport aux autres.

12. Dispositif de conversion d'énergie électrochimique selon l'une quelconque des revendications précédentes, **caractérisé par** au moins un canal de refroidissement (200, 202) destiné à être traversé par un fluide de refroidissement, lequel canal de refroidissement (200, 202) est délimité au moins par endroits par la pile de cellules (16) et au moins par endroits par le boîtier (26),
dans lequel en particulier l'au moins un canal de refroidissement (200, 202) est délimité par une face latérale longitudinale (196, 198) et une section de paroi du boîtier (26), laquelle section de paroi s'étend entre les deux arêtes longitudinales (204, 60 ; 206 ; 56) de la face latérale longitudinale (196, 198) associée,
dans lequel par ailleurs en particulier la face latérale longitudinale (196, 198), délimitant l'au moins un canal de refroidissement (200, 202), de la pile de cellules (16) est fermée de manière étanche aux fluides.

13. Dispositif de conversion d'énergie électrochimique selon l'une quelconque des revendications précédentes, **caractérisé en ce que**
a) les canaux de fluide (18, 20, 22, 24) sont réalisés sans éléments d'étanchéité périphériques le long de leur extension de manière parallèle par rapport à l'axe longitudinal (14)
et/ou
b) est disposé, entre deux cellules électrochimiques (12) de la pile de cellules (16), un élément de séparation (178), lequel jouxte d'une part une plaque bipolaire (150) de l'une cellule électrochimique (12) et lequel jouxte d'autre part une plaque bipolaire (148) de l'autre cellule électrochimique (12),
dans lequel en particulier
bl) l'élément de séparation (178) étanchéifie deux faces latérales longitudinales (170, 172) pointant de manière à s'éloigner l'une de l'autre de la plaque bipolaire (150) de l'une cellule électrochimique (12) et deux faces latérales longitudinales (166, 168) pointant de manière à s'éloigner l'une de l'autre de la plaque bipolaire (148) de l'autre cellule électrochimique (12)
et/ou
b2) la plaque bipolaire (148) de l'une cellule électrochimique (12) définit une première plaque bipolaire (148) de celle-ci même et que la plaque bipolaire (150) de l'autre cellule électrochimique (12) définit une deuxième plaque bipolaire (150) et/ou
b3) l'unité membrane-électrodes (146) comprend une membrane de remplacement de protons (152) à isolation électrique et que la membrane de remplacement de protons (152) est disposée entre deux éléments de séparation (178) et isole ceux-ci électriquement l'un de l'autre
et/ou
b4) l'élément de séparation (178) est réalisé de manière étanche aux fluides et de manière électriquement conductrice.

14. Dispositif de conversion d'énergie électrochimique selon l'une quelconque des revendications précédentes, **caractérisé en ce que**
a) au moins deux raccords de fluide (92, 94, 96, 98) sont disposés ou réalisés sur le boîtier (26) ou que chacun des deux raccords de fluide (92, 94, 96, 98) est en communication fluidique avec l'un des au moins deux canaux de fluide (18, 20, 22, 24)
et/ou
b) plusieurs raccords de fluide (92, 94, 96, 98), en particulier deux, trois ou quatre, sont associés à chaque canal de fluide (18, 20, 22, 24)
et/ou
c) le boîtier (26) est réalisé de manière stable à la pression
et/ou
d) la pile de cellules (16) est réalisée de manière angulaire par rapport à l'axe longitudinal (14), en particulier avec trois, quatre, cinq, six ou huit angles et/ou
e) les au moins deux cellules électrochimiques (12) sont réalisées sous la forme de piles à combustible ou sous la forme de cellules d'électrolyse ou sous la forme de pompes à protons.

15. Utilisation d'un dispositif de conversion d'énergie électrochimique (10) selon l'une quelconque des revendications précédentes pour convertir de l'énergie chimique en énergie électrique ou pour convertir de l'énergie électrique en énergie chimique ou en tant que pompe à protons.
